# EUROPEAN PATENT APPLICATION

(11) **EP 4 412 335 A1**
(43) Date of publication of application: **07.08.2024**
(21) Application number: 22880261.7
(22) Date of filing: 10.10.2022
(51) Int. Cl.: H04W 68/08

(54) **SIDELINK COMMUNICATION METHOD, COMMUNICATION APPARATUS AND COMMUNICATION SYSTEM**

(30) Priority: 15.10.2021 CN 202111205669
(71) Applicant: Huawei Technologies Co., Ltd., Shenzhen, Guangdong 518129 (CN)
(72) Inventor: LI, Xiangyu, Shenzhen, Guangdong 518129 (CN); PENG, Wenjie, Shenzhen, Guangdong 518129 (CN)
(74) Representative: Pfenning, Meinig & Partner mbB
(86) International application number: PCT/CN2022/124344
(87) International publication number: WO 2023/061322

(57) **Abstract**

A sidelink communication method, a communication apparatus, and a communication system are provided, to perform sidelink communication configuration in a relay scenario. The method includes: A remote device sends first information to a relay device; the relay device receives the first information from the remote device, where the first information includes a first paging parameter of the remote device; the relay device sends second information to a first network device, where the second information includes the first paging parameter; the first network device receives the second information from the relay device; and the first network device performs sidelink configuration based on the second information. In this way, the first network device can obtain the first paging parameter of the remote device, and perform sidelink communication configuration based on the first paging parameter. The first network device performs sidelink communication configuration based on the first paging parameter, so that quality of sidelink communication between the relay device and the remote device is improved, and scheduling flexibility of the first network device is improved.

## Description

### CROSS-REFERENCE TO RELATED APPLICATIONS

This application claims priority to Chinese Patent Application No. 202111205669.0, filed with the China National Intellectual Property Administration on October 15, 2021 and entitled "SIDELINK COMMUNICATION METHOD, COMMUNICATION APPARATUS, AND COMMUNICATION SYSTEM", which is incorporated herein by reference in its entirety.

### TECHNICAL FIELD

This application relates to the field of communication technologies, and in particular, to a sidelink communication method, a communication apparatus, and a communication system.

### BACKGROUND

Quality of communication between a terminal device and a network side is related to a coverage signal of a network device. For example, when the terminal device moves, quality of a signal between the terminal device and the network device may deteriorate. To improve network and system performance, a terminal device having a relay function may be deployed in a communication system. The terminal device having the relay function may be referred to as a relay device. The relay device may assist a remote terminal device in forwarding a signal, and the remote terminal device may be referred to as a remote device. The relay device may forward data from the network device to the remote device through a sidelink (sidelink, SL), or may forward data from the remote device to the network device, so that coverage can be enhanced. The network device may perform SL communication configuration for the relay device, or may perform SL communication configuration for the remote device. The SL communication configuration may be, for example, an SL transmission resource configuration.

In a relay scenario, how to perform SL communication configuration needs to be considered.

### SUMMARY

Embodiments of this application provide a sidelink communication method, a communication apparatus, and a communication system, to resolve a problem of how to perform SL communication configuration in a relay scenario.

According to a first aspect, a sidelink communication method is provided. The method may be performed by a relay device, or may be performed by a component of the relay device. The relay device may implement a relay forwarding function between a network device and a remote device. The network device may be denoted as a first network device. The relay device and the remote device communicate and interact with each other by using an SL. The remote device communicates and interacts with the first network device by using the relay device. The method may be implemented by using the following steps: The relay device receives first information from the remote device, where the first information includes a first paging parameter of the remote device; and the relay device sends second information to the first network device, where the second information includes the first paging parameter. The remote device sends the first paging parameter of the remote device to the relay device, and the relay device sends the first paging parameter to the first network device, so that the first network device can obtain the first paging parameter of the remote device, and perform SL communication configuration based on the first paging parameter. The SL communication configuration may be a related SL communication configuration of the remote device or a related SL communication configuration of the relay device. The first network device performs SL communication configuration based on the first paging parameter, so that quality of SL communication between the relay device and the remote device can be improved, and scheduling flexibility of the first network device can be improved.

In a possible design, the SL communication configuration includes a first SL discontinuous reception (discontinuous reception, DRX) configuration. The relay device receives the first SL DRX configuration from the first network device, and the first SL DRX configuration is used by the relay device to send a first message to the remote device. In this way, the relay device discontinuously sends the first message to the remote device based on the first SL DRX configuration, thereby reducing power consumption of the relay device. If the first message is a paging message, a network side pages the remote device discontinuously at a particular moment, and the relay device may send the paging message to the remote device discontinuously based on the first SL DRX configuration. In this way, a communication scenario in which the relay device forwards the paging message can be better adapted, and power consumption of the relay device can be reduced.

On a basis that the relay device receives the first SL DRX configuration from the first network device, optionally, the relay device sends the first SL DRX configuration to the remote device.

In a possible design, the first SL DRX configuration is determined based on the second information. The second information includes the first paging parameter, and the first SL DRX configuration is determined based on the first paging parameter. The first paging parameter is a parameter related to a paging configuration. Therefore, the first SL DRX configuration is associated with the paging configuration. In this way, the first SL DRX configuration used by the relay device to forward the paging message can better match a paging configuration used by the network side to send the paging message. This helps the relay device better implement a paging message forwarding function, thereby improving paging performance.

In a possible design, the first message is for paging the remote device, and the first message may be system information, or the first message may be other information or data sent by the relay device to the remote device. In this way, the first SL DRX configuration can be used for a plurality of types of information. For example, the remote device may receive a paging message, system information, or other information in an active time period based on the first SL DRX configuration. In this way, SL DRX configuration overheads can be reduced.

In a possible design, the first paging parameter includes a first identifier of the remote device. The first identifier may be a globally unique identifier of the remote device. The first identifier of the remote device is a parameter for determining the first SL DRX configuration. The relay device receives the first identifier of the remote device from the remote device, and sends the first identifier to the first network device. In this way, the first network device can determine the first SL DRX configuration based on the first identifier of the remote device.

On a basis that the first paging parameter includes the first identifier of the remote device, optionally, the first paging parameter may further include cycle information. The cycle information is a parameter for determining the first SL DRX configuration. The relay device sends the first identifier of the remote device and the cycle information to the first network device. In this way, the first network device can obtain the parameter for determining the first SL DRX configuration, and determine the first SL DRX configuration based on the first identifier of the remote device and the cycle information.

In a possible design, the second information further includes delay information, and the delay information indicates a delay of forwarding a message from the first network device by the relay device to the remote device. The delay herein may be denoted as a first delay. The relay device sends the delay information to the first network device, and the first network device may determine the first SL DRX configuration based on the delay information. In this way, a difference between the first SL DRX configuration and the paging configuration can be considered, so that the first SL DRX configuration can better match the paging configuration used by the network side to send the paging message. This helps the relay device better implement a paging message forwarding function, thereby improving paging performance.

In a possible design, the second information further includes a time interval between a system frame number (system frame number, SFN) and a direct frame number (direct frame number, DFN). The second information carries the time interval between the SFN and the DFN, and the first network device may configure the first SL DRX configuration based on the time interval. The paging configuration is based on the SFN, and the first SL DRX configuration is based on the DFN. The first network device can consider the difference between the first SL DRX configuration and the paging configuration, so that the first SL DRX configuration can better match the paging configuration used by the network side to send the paging message. This helps the relay device better implement a paging message forwarding function, thereby improving paging performance.

In a possible design, the second information further includes a second identifier of the remote device. The second identifier of the remote device may be a destination identifier (destination ID) and/or a local identifier (local ID). Both the destination ID and the local ID may indicate a specific remote device. For example, when the relay device implements a relay function for a plurality of remote devices, the destination identifier and/or the local identifier may indicate one of the plurality of remote devices. The second identifier of the remote device may be used for identification by the relay device or the first network device, and may be an identifier at a local granularity.

On a basis that the second information includes the delay information, the first SL DRX configuration includes information indicating a start moment of a first SL DRX on-duration timer, and a difference between the start moment of the first SL DRX on-duration timer and a start moment of a paging occasion PO of the remote device is less than or equal to the first delay. When the difference between the start moment of the first SL DRX on-duration timer and the start moment of the paging occasion PO of the remote device is equal to the first delay, the relay device starts to attempt to receive a message from the first network device at a first moment, processes, within the first delay following the first moment, the message received from the first network device, to obtain the first message, and sends the first message to the remote device at a second moment, where a time difference between the second moment and the first moment is the first delay. In this way, a start moment at which the remote device receives the first message can better match a moment at which the network side sends the message. When the difference between the start moment of the first SL DRX on-duration timer and the start moment of the paging occasion PO of the remote device is less than the first delay, a moment at which the remote device starts to attempt to receive the first message can be earlier than a moment at which the relay device sends the first message, to ensure that the remote device can receive the first message.

In a possible design, the first SL DRX configuration further includes a first SL DRX cycle, the first SL DRX cycle is a cycle in which the relay device sends the first message to the remote device, the first SL DRX cycle is the same as a paging cycle of the remote device, and the paging cycle of the remote device is a cycle in which the first network device pages the remote device. The cycles are set to be the same, so that the first SL DRX configuration can better match the paging configuration used by the network side to send the paging message. In this way, a mode in which the remote device receives the first message can better match a mode in which the network device sends the paging message, and a solution in which the relay device forwards the paging message is better implemented.

In a possible design, the first SL DRX configuration further includes duration of the first SL DRX on-duration timer, and the duration of the first SL DRX on-duration timer is greater than or equal to duration of the PO of the remote device. The duration is set to be the same, so that the first SL DRX configuration can better match the paging configuration used by the network side to send the paging message. In this way, a mode in which the remote device receives the first message can better match a mode in which the network device sends the paging message, and a solution in which the relay device forwards the paging message is better implemented. When the duration of the first SL DRX on-duration timer is greater than the duration of the PO of the remote device, it is more helpful to ensure that the remote device can receive the first message.

In a possible design, the method may further include the following step: The relay device receives a second SL DRX configuration from the remote device, where the second SL DRX configuration is determined based on the first SL DRX configuration, and the second SL DRX configuration is used by the relay device to receive a second message from the remote device; and After the relay device sends the first message to the remote device, the remote device sends the second message to the relay device. For example, the first message is a paging message, and the second message is a response message of the paging message. By using the second SL DRX configuration, the relay device can discontinuously receive the second message, thereby helping reduce power consumption of receiving the second message by the relay device. The second SL DRX configuration is determined based on the first SL DRX configuration, so that a mode in which the relay device receives the second message can match a mode in which the remote device receives the first message. The mode may be, for example, some SL DRX configurations such as a message receiving cycle, a start moment of an on-duration timer, or duration of the on-duration timer.

In a possible design, the second SL DRX configuration indicates a start moment of a second SL DRX on-duration timer, the start moment of the second SL DRX on-duration timer is determined based on a second delay, and the second delay is a delay from receiving the first message from the relay device by the remote device to sending a response message of the first message to the relay device by the remote device. Because the start moment of the second SL DRX on-duration timer is determined based on the second delay, a difference between the second SL DRX configuration and the first SL DRX configuration can be considered, so that the second SL DRX configuration can better match the first SL DRX configuration.

Optionally, a difference between the start moment of the second SL DRX on-duration timer and the start moment of the first SL DRX on-duration timer is less than or equal to the second delay. The start moment of the first SL DRX on-duration timer is indicated by the first SL DRX configuration. For example, when the difference between the start moment of the second SL DRX on-duration timer and the start moment of the first SL DRX on-duration timer is equal to the first delay, the remote device starts to attempt to receive the first message from the relay device at a third moment, obtains the second message after the second delay following the third moment, and sends the second message to the relay device at a fourth moment. A time difference between the fourth moment and the third moment is the second delay. In this way, a start moment at which the relay device receives the second message can better match a moment at which the remote device sends the second message after receiving the first message. When the difference between the start moment of the second SL DRX on-duration timer and the start moment of the first SL DRX on-duration timer is less than the first delay, a moment at which the relay device receives the second message can be earlier than a moment at which the relay device sends the second message, to ensure that the relay device can receive the second message.

In a possible design, the second SL DRX configuration further includes a second SL DRX cycle, and the second SL DRX cycle is determined based on the first SL DRX cycle in the first SL DRX configuration. The cycles are set to be the same, so that the second SL DRX configuration can better match the first SL DRX configuration. In this way, a mode in which the relay device receives the second message can better match a mode in which the remote device receives the first message, thereby better implementing a solution in which the relay device forwards the paging message.

In a possible design, the second SL DRX configuration further includes duration of the second SL DRX on-duration timer, and the duration of the second SL DRX on-duration timer is determined based on the duration of the first SL DRX on-duration timer in the first SL DRX configuration. For example, the duration of the second SL DRX on-duration timer may be the same as the duration of the first SL DRX on-duration timer in the first SL DRX configuration. The duration is set to be the same, so that the second SL DRX configuration can better match the first SL DRX configuration. In this way, a mode in which the relay device receives the second message can better match a mode in which the remote device receives the first message, thereby better implementing a solution in which the relay device forwards the paging message. The duration of the second SL DRX on-duration timer may alternatively be greater than the duration of the first SL DRX on-duration timer in the first SL DRX configuration. This better helps ensure that the remote device can receive the second message.

According to a second aspect, a sidelink communication method is provided. The method may be performed by a first network device, or may be performed by a component of the first network device. A relay device may implement a relay forwarding function between a network device and a remote device. The network device may be denoted as the first network device. The relay device and the remote device communicate and interact with each other by using an SL. The remote device communicates and interacts with the first network device by using the relay device. The method may be implemented by using the following steps: A first network device receives second information from a relay device, where the second information includes a first paging parameter of a remote device; and the first network device performs SL communication configuration based on the second information. The first network device obtains the first paging parameter of the remote device, so that the first network device can perform SL communication configuration based on the first paging parameter. The SL communication configuration may be a related SL communication configuration of the remote device or a related SL communication configuration of the relay device. The first network device performs SL communication configuration based on the first paging parameter, so that quality of SL communication between the relay device and the remote device can be improved, and scheduling flexibility of the first network device can be improved.

In a possible design, the first paging parameter includes a first identifier of the remote device. In this way, the first network device can determine the SL communication configuration based on the first identifier of the remote device.

The first network device may perform any one or more of the following possible configurations based on the second information.

In a first possible design, the SL communication configuration includes an SL configured grant (SL configured grant) of the relay device, the SL configured grant is for configuring an SL transmission resource for the relay device, and the SL transmission resource is used by the relay device to send a message to the remote device. The SL configured grant is configured for the relay device by using the SL communication configuration, to avoid a delay caused when the relay device requests the SL transmission resource only after sending a buffer status report (buffer size report, BSR). This can reduce a delay of forwarding a message from the first network device by the relay device to the remote device.

In a second possible design, the first network device may perform DRX configuration of the relay device based on the second information. The DRX configuration of the relay device is used by the relay device to receive a network-side message through an air interface (for example, a Uu interface). The first network device may determine, based on the second information, time when a paging message is delivered, so that time when the relay device starts to attempt to receive the paging message through the air interface can be configured based on the second information. The paging message may be transmitted by using radio resource control (radio resource control, RRC) dedicated signaling. Power consumption of the relay device can be reduced by using the DRX configuration of the relay device.

In a third possible design, the SL communication configuration may include a first SL discontinuous reception DRX configuration, where the first SL DRX configuration is for transmitting a first message, and the first message is a message sent by the relay device to the remote device.

Based on the third possible design, the following provides some optional implementations. For beneficial effects of these optional implementations, refer to related descriptions of the first aspect. Details are not described herein again.

Optionally, the first network device sends the first SL DRX configuration to the relay device.

Optionally, the first SL DRX configuration is determined based on the second information.

Optionally, the first message is for paging the remote device.

Optionally, the second information further includes delay information, and the delay information indicates a first delay of forwarding a message from the first network device by the relay device to the remote device.

Optionally, the first SL DRX configuration includes information indicating a start moment of a first SL DRX on-duration timer, and a difference between the start moment of the first SL DRX on-duration timer and a start moment of a paging occasion PO of the remote device is less than or equal to the first delay.

Optionally, the second information further includes a time interval between a system frame number SFN and a direct frame number DFN.

Optionally, the first SL DRX configuration further includes a first SL DRX cycle, and the first SL DRX cycle is the same as a paging cycle of the remote device.

Optionally, the first SL DRX configuration further includes duration of the first SL DRX on-duration timer, and the duration of the first SL DRX on-duration timer is greater than or equal to duration of the PO of the remote device.

In a possible design, the first network device may obtain the first SL DRX configuration in the following several manners.

In a first possible manner, the first paging parameter further includes cycle information.

Optionally, on a basis that the first paging parameter includes the cycle information, that the first network device performs SL configuration based on the second information may mean: The first network device determines the first SL DRX configuration based on the second information.

In a second possible manner, the first network device sends first request information to a second network device, where the first request information is for requesting cycle information. The first network device receives the cycle information from the second network device, where the second network device is a core network device of the remote device or an anchor gNB of the remote device. The first network device determines the first SL DRX configuration based on the second information and the cycle information.

In the first or the second possible manner, the first network device determines the first SL DRX configuration. Further, when determining the first SL DRX configuration, the first network device may determine the first SL DRX configuration based on third information, where the third information includes a paging control channel (paging control channel, PCCH)-configuration (PCCH-config).

In a third possible manner, the first network device sends second request information to a second network device, where the second network device is a core network device of the remote device or an anchor gNB of the remote device, and the second request information is for requesting to configure an SL DRX configuration for the remote device. The first network device receives the first SL DRX configuration from the second network device.

Based on the third possible manner, the second request information may carry the second information and/or third information, where the third information includes a paging control channel configuration.

According to a third aspect, a sidelink communication method is provided. The method may be performed by a remote device, or may be performed by a component of the remote device. A relay device may implement a relay forwarding function between a network device and the remote device. The network device may be denoted as the first network device. The relay device and the remote device communicate and interact with each other by using an SL. The remote device communicates and interacts with the first network device by using the relay device. The method may be implemented by using the following steps: A remote device sends first information to a relay device, where the first information includes a first paging parameter of the remote device; and the remote device receives an SL communication configuration from the relay device, where the SL communication configuration is, for example, a first sidelink SL discontinuous reception DRX configuration, the first SL DRX configuration is determined based on second information, the second information includes the first paging parameter, and the first SL DRX configuration is used by the remote device to receive a first message from the relay device. The remote device may discontinuously receive the first message from the relay device based on the first SL DRX configuration. Power consumption of the remote device can be reduced compared with continuously receiving the first message. If the first message is a paging message, the network device pages the remote device discontinuously, and the remote device discontinuously receives the paging message based on the first SL DRX configuration. This can better adapt to a communication scenario in which the relay device forwards the paging message to the remote device. The first SL DRX configuration is determined based on the second information. The second information includes the first paging parameter, and the first SL DRX configuration is determined based on the first paging parameter. The first paging parameter is a parameter related to a paging configuration. Therefore, the first SL DRX configuration is associated with the paging configuration. In this way, the first SL DRX configuration used by the remote device to receive the paging message can better match a paging configuration used by a network side to send the paging message. This helps the remote device better receive the paging message, thereby improving paging performance.

Based on the third aspect, the following provides some possible designs. For beneficial effects of the following possible designs, refer to related descriptions of the first aspect. Details are not described herein again.

In a possible design, the first paging parameter includes a first identifier of the remote device.

In a possible design, the first paging parameter further includes cycle information.

In a possible design, the first message is for paging the remote device.

In a possible design, the second information further includes delay information, and the delay information indicates a first delay of forwarding a message from the first network device by the relay device to the remote device.

In a possible design, the second information further includes a time interval between a system frame number SFN and a direct frame number DFN.

In a possible design, the first SL DRX configuration includes information indicating a start moment of a first SL DRX on-duration timer, and a difference between the start moment of the first SL DRX on-duration timer and a start moment of a paging occasion PO of the remote device is less than or equal to the first delay.

In a possible design, the first SL DRX configuration further includes a first SL DRX cycle, and the first SL DRX cycle is the same as a paging cycle of the remote device.

In a possible design, the first SL DRX configuration further includes duration of the first SL DRX on-duration timer, and the duration of the first SL DRX on-duration timer is greater than or equal to duration of the PO of the remote device.

In a possible design, the method further includes the following step: The remote device sends a second SL DRX configuration to the relay device, where the second SL DRX configuration is determined based on the first SL DRX configuration, and the second SL DRX configuration is used by the remote device to send a second message to the relay device. After the relay device sends the first message to the remote device, the remote device sends the second message to the relay device. For example, the first message is a paging message, and the second message is a response message of the paging message. By using the second SL DRX configuration, the remote device can discontinuously send the second message, thereby helping reduce power consumption of sending the second message by the remote device. The second SL DRX configuration is determined based on the first SL DRX configuration, so that a mode in which the remote device sends the second message can match a mode in which the remote device receives the first message. The mode may be, for example, some SL DRX configurations such as a message receiving cycle, a start moment of an on-duration timer, or duration of the on-duration timer.

In a possible design, the second SL DRX configuration includes information indicating a start moment of a second SL DRX on-duration timer, the start moment of the second SL DRX on-duration timer is determined based on a second delay, and the second delay is a delay from receiving the first message from the relay device by the remote device to sending a response message of the first message to the relay device by the remote device.

In a possible design, the second SL DRX configuration further includes a second SL DRX cycle, and the second SL DRX cycle is determined based on the first SL DRX cycle in the first SL DRX configuration.

In a possible design, the second SL DRX configuration further includes duration of the second SL DRX on-duration timer, and the duration of the second SL DRX on-duration timer is determined based on the duration of the first SL DRX on-duration timer in the first SL DRX configuration. For example, the duration of the second SL DRX on-duration timer is the same as the duration of the first SL DRX on-duration timer. The duration of the second SL DRX on-duration timer may alternatively be greater than the duration of the first SL DRX on-duration timer in the first SL DRX configuration.

According to a fourth aspect, a sidelink communication method is provided. The method may be performed by a second network device, or may be performed by a component of the second network device. The second network device is a core network device of a remote device or an anchor gNB of the remote device, and a relay device may implement a relay forwarding function between a first network device and the remote device. The relay device communicates and interacts with the remote device by using an SL and the remote device communicates and interacts with the first network device by using the relay device. The method may be implemented by using the following steps: The second network device receives first request information from the first network device, where the first request information is for requesting cycle information; and the second network device sends the cycle information to the first network device. The cycle information is for determining a first SL DRX configuration. For a concept and a function of the first SL DRX configuration, refer to the description in the first aspect. Details are not described herein again.

In a possible design, the first request information carries a first identifier of the remote device.

The solution of the fourth aspect corresponds to the second possible manner in the second aspect. To be specific, the first network device sends the first request information to the second network device; the first network device receives the cycle information from the second network device; and the first network device determines the first SL DRX configuration based on the second information and the cycle information.

According to a fifth aspect, a sidelink communication method is provided. The method may be performed by a second network device, or may be performed by a component of the second network device. The second network device is a core network device of a remote device or an anchor gNB of the remote device, and a relay device may implement a relay forwarding function between a first network device and the remote device. The relay device communicates and interacts with the remote device by using an SL and the remote device communicates and interacts with the first network device by using the relay device. The method may be implemented by using the following steps: The second network device receives second request information from the first network device, where the second request information is for requesting to configure an SL DRX configuration for the remote device; and the second network device sends the first SL DRX configuration to the first network device. For a concept and a function of the first SL DRX configuration, refer to the description in the first aspect. Details are not described herein again.

In a possible design, the second request information may carry second information and/or third information, where the third information includes a paging control channel configuration.

The solution of the fifth aspect corresponds to the third possible manner in the second aspect. To be specific, the first network device sends the second request information to the second network device, and the first network device receives the first SL DRX configuration from the second network device.

According to a sixth aspect, a sidelink communication method is provided. The method may be performed by a relay device, or may be performed by a component of the relay device. A relay device may implement a relay forwarding function between a network device and the remote device. The network device may be denoted as the first network device. The relay device and the remote device communicate and interact with each other by using an SL. The remote device communicates and interacts with the first network device by using the relay device. The method may be implemented by using the following steps: The relay device receives first information from the remote device, where the first information includes a first paging parameter of the remote device; and the relay device determines a first sidelink SL discontinuous reception DRX configuration based on the first information, where the first SL DRX configuration is used by the remote device to receive a first message from the relay device. In this way, when the remote device receives the first message from the relay device, power consumption of the remote device can be reduced. If the first message is a paging message, a network side pages the remote device discontinuously at a particular moment, and the relay device may receive the paging message discontinuously based on the first SL DRX configuration. In this way, a communication scenario in which the relay device forwards the paging message can be better adapted, and power consumption of the remote device can be reduced. The method is applicable to a scenario in which the relay device is in non-connected mode.

In a possible design, when determining the first SL DRX configuration based on the first information, the relay device may determine the first SL DRX configuration based on the first information and third information. The third information includes a paging control channel configuration.

When the relay device determines the first SL DRX configuration based on the first information and the third information, optionally, the relay device may obtain the third information in the following manner: The relay device receives the third information from the first network device, where the third information includes a paging control channel configuration. For example, the paging control channel configuration may include system information (system information, SI) or a SIB1.

In a possible design, the first message is for paging the remote device, and the first message may be system information, or the first message may be other information or data sent by the relay device to the remote device. In this way, the first SL DRX configuration can be used for a plurality of types of information. For example, the remote device may receive a paging message, system information, or other information in an active time period based on the first SL DRX configuration. In this way, SL DRX configuration overheads can be reduced.

In a possible design, the first paging parameter includes a first identifier of the remote device. The first identifier of the remote device is a parameter for determining the first SL DRX configuration. The relay device receives the first identifier of the remote device from the remote device, and sends the first identifier to the first network device. In this way, the first network device can determine the first SL DRX configuration based on the first identifier of the remote device.

On a basis that the first paging parameter includes the first identifier of the remote device, optionally, the first paging parameter may further include cycle information. The cycle information is a parameter for determining the first SL DRX configuration. The relay device sends the first identifier of the remote device and the cycle information to the first network device. In this way, the first network device can obtain the parameter for determining the first SL DRX configuration, and determine the first SL DRX configuration based on the first identifier of the remote device and the cycle information.

In a possible design, the first SL DRX configuration further includes a first SL DRX cycle, the first SL DRX cycle is a cycle in which the relay device sends the first message to the remote device, the first SL DRX cycle is the same as a paging cycle of the remote device, and the paging cycle of the remote device is a cycle in which the first network device pages the remote device. The cycles are set to be the same, so that the first SL DRX configuration can better match the paging configuration used by the network side to send the paging message. In this way, a mode in which the remote device receives the first message can better match a mode in which the network device sends the paging message, and a solution in which the relay device forwards the paging message is better implemented.

In a possible design, the first SL DRX configuration further includes duration of a first SL DRX on-duration timer, and the duration of the first SL DRX on-duration timer is greater than or equal to duration of a PO of the remote device. The duration is set to be the same, so that the first SL DRX configuration can better match the paging configuration used by the network side to send the paging message. In this way, a mode in which the remote device receives the first message can better match a mode in which the network device sends the paging message, and a solution in which the relay device forwards the paging message is better implemented. When the duration of the first SL DRX on-duration timer is greater than the duration of the PO of the remote device, it is more helpful to ensure that the remote device can receive the first message.

In a possible design, the method may further include the following step: The relay device receives a second SL DRX configuration from the remote device, where the second SL DRX configuration is determined based on the first SL DRX configuration, and the second SL DRX configuration is used by the relay device to receive a second message from the remote device; and After the relay device sends the first message to the remote device, the remote device sends the second message to the relay device. For example, the first message is a paging message, and the second message is a response message of the paging message. By using the second SL DRX configuration, the relay device can discontinuously receive the second message, thereby helping reduce power consumption of receiving the second message by the relay device. The second SL DRX configuration is determined based on the first SL DRX configuration, so that a mode in which the relay device receives the second message can match a mode in which the remote device receives the first message. The mode may be, for example, some SL DRX configurations such as a message receiving cycle, a start moment of an on-duration timer, or duration of the on-duration timer.

In a possible design, the second SL DRX configuration includes information indicating a start moment of a second SL DRX on-duration timer, the start moment of the second SL DRX on-duration timer is determined based on a second delay, and the second delay is a delay from receiving the first message from the relay device by the remote device to sending a response message of the first message to the relay device by the remote device. Because the start moment of the second SL DRX on-duration timer is determined based on the second delay, a difference between the second SL DRX configuration and the first SL DRX configuration can be considered, so that the second SL DRX configuration can better match the first SL DRX configuration.

Optionally, a difference between the start moment of the second SL DRX on-duration timer and a start moment of the first SL DRX on-duration timer is less than or equal to the second delay. The start moment of the first SL DRX on-duration timer is indicated by the first SL DRX configuration. For example, when the difference between the start moment of the second SL DRX on-duration timer and the start moment of the first SL DRX on-duration timer is equal to the first delay, the remote device starts to attempt to receive the first message from the relay device at a third moment, obtains the second message after the second delay following the third moment, and sends the second message to the relay device at a fourth moment. A time difference between the fourth moment and the third moment is the second delay. In this way, a start moment at which the relay device receives the second message can better match a moment at which the remote device sends the second message after receiving the first message. When the difference between the start moment of the second SL DRX on-duration timer and the start moment of the first SL DRX on-duration timer is less than the first delay, a moment at which the relay device receives the second message can be earlier than a moment at which the relay device sends the second message, to ensure that the relay device can receive the second message.

In a possible design, the second SL DRX configuration further includes a second SL DRX cycle, and the second SL DRX cycle is determined based on the first SL DRX cycle in the first SL DRX configuration. The cycles are set to be the same, so that the second SL DRX configuration can better match the first SL DRX configuration. In this way, a mode in which the relay device receives the second message can better match a mode in which the remote device receives the first message, thereby better implementing a solution in which the relay device forwards the paging message.

In a possible design, the second SL DRX configuration further includes duration of the second SL DRX on-duration timer, and the duration of the second SL DRX on-duration timer is determined based on the duration of the first SL DRX on-duration timer in the first SL DRX configuration. For example, the duration of the second SL DRX on-duration timer may be the same as the duration of the first SL DRX on-duration timer in the first SL DRX configuration. The duration is set to be the same, so that the second SL DRX configuration can better match the first SL DRX configuration. In this way, a mode in which the relay device receives the second message can better match a mode in which the remote device receives the first message, thereby better implementing a solution in which the relay device forwards the paging message. The duration of the second SL DRX on-duration timer may alternatively be greater than the duration of the first SL DRX on-duration timer in the first SL DRX configuration. This better helps ensure that the remote device can receive the second message.

According to a seventh aspect, a sidelink communication method is provided. The method may be performed by a remote device, or may be performed by a component of the remote device. A relay device may implement a relay forwarding function between a first network device and the remote device. The relay device and the remote device communicate and interact with each other by using an SL. The remote device communicates and interacts with the first network device by using the relay device. The method may be implemented by using the following steps: The remote device receives fourth information from the relay device, where the fourth information includes DRX assistance information of the remote device; and the remote device determines a first SL DRX configuration based on the fourth information, where the first SL DRX configuration is used by the remote device to receive a first message from the relay device.

In a possible design, the DRX assistance information includes delay information, and the delay information indicates a delay of forwarding a message from the first network device by the relay device to the remote device. The remote device may determine the first SL DRX configuration based on the delay information. In this way, a difference between the first SL DRX configuration and the paging configuration can be considered, so that the first SL DRX configuration can better match the paging configuration used by the network side to send the paging message. This helps the remote device better receive the paging message while reducing power consumption, thereby improving paging performance.

In a possible design, the DRX assistance information further includes a time interval between a system frame number SFN and a direct frame number DFN. The remote device may configure the first SL DRX configuration based on the time interval. In this way, the difference between the first SL DRX configuration and the paging configuration can be considered, so that the first SL DRX configuration can better match the paging configuration used by the network side to send the paging message. This helps the remote device better receive the paging message while reducing power consumption, and helps the relay device better send the paging message while reducing power consumption, thereby improving paging performance.

In a possible design, the remote device sends the first SL DRX configuration to the relay device. In this way, the relay device may send the paging message of the remote device based on the first SL DRX configuration, so that the paging message can be better forwarded while reducing power consumption of the relay device, thereby improving paging performance.

In a possible design, the first message is for paging the remote device, and the first message may be system information, or the first message may be other information or data sent by the relay device to the remote device. In this way, the first SL DRX configuration can be used for a plurality of types of information. For example, the remote device may receive a paging message, system information, or other information in an active time period based on the first SL DRX configuration. In this way, SL DRX configuration overheads can be reduced.

In a possible design, the first SL DRX configuration further includes a first SL DRX cycle, the first SL DRX cycle is a cycle in which the relay device sends the first message to the remote device, the first SL DRX cycle is the same as a paging cycle of the remote device, and the paging cycle of the remote device is a cycle in which the first network device pages the remote device. The cycles are set to be the same, so that the first SL DRX configuration can better match the paging configuration used by the network side to send the paging message. In this way, a mode in which the remote device receives the first message can better match a mode in which the network device sends the paging message, and a solution in which the relay device forwards the paging message is better implemented.

In a possible design, the first SL DRX configuration further includes duration of a first SL DRX on-duration timer, and the duration of the first SL DRX on-duration timer is greater than or equal to duration of a PO of the remote device. The duration is set to be the same, so that the first SL DRX configuration can better match the paging configuration used by the network side to send the paging message. In this way, a mode in which the remote device receives the first message can better match a mode in which the network device sends the paging message, and a solution in which the relay device forwards the paging message is better implemented. When the duration of the first SL DRX on-duration timer is greater than the duration of the PO of the remote device, it is more helpful to ensure that the remote device can receive the first message.

In a possible design, the method may further include the following step: The relay device receives a second SL DRX configuration from the remote device, where the second SL DRX configuration is determined based on the first SL DRX configuration, and the second SL DRX configuration is used by the relay device to receive a second message from the remote device; and After the relay device sends the first message to the remote device, the remote device sends the second message to the relay device. For example, the first message is a paging message, and the second message is a response message of the paging message. By using the second SL DRX configuration, the relay device can discontinuously receive the second message, thereby helping reduce power consumption of receiving the second message by the relay device. The second SL DRX configuration is determined based on the first SL DRX configuration, so that a mode in which the relay device receives the second message can match a mode in which the remote device receives the first message. The mode may be, for example, some SL DRX configurations such as a message receiving cycle, a start moment of an on-duration timer, or duration of the on-duration timer.

In a possible design, the second SL DRX configuration includes information indicating a start moment of a second SL DRX on-duration timer, the start moment of the second SL DRX on-duration timer is determined based on a second delay, and the second delay is a delay from receiving the first message from the relay device by the remote device to sending a response message of the first message to the relay device by the remote device. Because the start moment of the second SL DRX on-duration timer is determined based on the second delay, a difference between the second SL DRX configuration and the first SL DRX configuration can be considered, so that the second SL DRX configuration can better match the first SL DRX configuration.

Optionally, a difference between the start moment of the second SL DRX on-duration timer and a start moment of the first SL DRX on-duration timer is less than or equal to the second delay. The start moment of the first SL DRX on-duration timer is indicated by the first SL DRX configuration. For example, when the difference between the start moment of the second SL DRX on-duration timer and the start moment of the first SL DRX on-duration timer is equal to the first delay, the remote device starts to attempt to receive the first message from the relay device at a third moment, obtains the second message after the second delay following the third moment, and sends the second message to the relay device at a fourth moment. A time difference between the fourth moment and the third moment is the second delay. In this way, a start moment at which the relay device receives the second message can better match a moment at which the remote device sends the second message after receiving the first message. When the difference between the start moment of the second SL DRX on-duration timer and the start moment of the first SL DRX on-duration timer is less than the first delay, a moment at which the relay device receives the second message can be earlier than a moment at which the relay device sends the second message, to ensure that the relay device can receive the second message.

In a possible design, the second SL DRX configuration further includes a second SL DRX cycle, and the second SL DRX cycle is determined based on the first SL DRX cycle in the first SL DRX configuration. The cycles are set to be the same, so that the second SL DRX configuration can better match the first SL DRX configuration. In this way, a mode in which the relay device receives the second message can better match a mode in which the remote device receives the first message, thereby better implementing a solution in which the relay device forwards the paging message.

In a possible design, the second SL DRX configuration further includes duration of the second SL DRX on-duration timer, and the duration of the second SL DRX on-duration timer is determined based on the duration of the first SL DRX on-duration timer in the first SL DRX configuration. For example, the duration of the second SL DRX on-duration timer may be the same as the duration of the first SL DRX on-duration timer in the first SL DRX configuration. The duration is set to be the same, so that the second SL DRX configuration can better match the first SL DRX configuration. In this way, a mode in which the relay device receives the second message can better match a mode in which the remote device receives the first message, thereby better implementing a solution in which the relay device forwards the paging message. The duration of the second SL DRX on-duration timer may alternatively be greater than the duration of the first SL DRX on-duration timer in the first SL DRX configuration. This better helps ensure that the remote device can receive the second message.

According to an eighth aspect, a sidelink communication method is provided. The method may be performed by a relay device, or may be performed by a component of the relay device. The relay device may implement a relay forwarding function between a first network device and a remote device. The relay device and the remote device communicate and interact with each other by using an SL. The remote device communicates and interacts with the first network device by using the relay device. The method may be implemented by using the following steps: The relay device sends fourth information to the remote device, where the fourth information includes DRX assistance information of the remote device; and the relay device determines a first SL DRX configuration based on the fourth information; or the relay device receives a first SL DRX configuration from the remote device. The first SL DRX configuration is determined based on the fourth information, and the first SL DRX configuration is used by the remote device to receive a first message from the relay device. For possible designs of the eighth aspect, refer to the possible designs of the seventh aspect. Details are not described herein again.

According to a ninth aspect, a communication apparatus is provided. The apparatus may be a relay device, or may be a component (for example, a chip, a chip system, or a circuit) in the relay device. The apparatus has a function of implementing the method according to any one of the first aspect or the possible designs of the first aspect. The function may be implemented by hardware, or may be implemented by executing corresponding software by hardware. The hardware or the software includes one or more modules corresponding to the foregoing function. In a design, the apparatus may include a processing unit and a transceiver unit. For example, the processing unit is configured to invoke the transceiver unit to perform a receiving or sending operation. The transceiver unit further includes a receiving unit and a sending unit. The receiving unit is configured to receive first information from a remote device, where the first information includes a first paging parameter of the remote device. The sending unit is configured to send second information to a first network device, where the second information includes the first paging parameter.

For more detailed descriptions of the processing unit, the receiving unit, and the sending unit, directly refer to related descriptions in the first aspect. For example, the receiving unit is further configured to receive a second SL DRX configuration from the remote device, where the second SL DRX configuration is determined based on the first SL DRX configuration, and the second SL DRX configuration is used by the relay device to receive a second message from the remote device.

For beneficial effects of the ninth aspect and the possible designs, refer to descriptions of corresponding parts in the first aspect.

According to a tenth aspect, a communication apparatus is provided. The apparatus may be a first network device, or may be a component (for example, a chip, a chip system, or a circuit) in the first network device. The apparatus has a function of implementing the method according to any one of the second aspect or the possible designs of the second aspect. The function may be implemented by hardware, or may be implemented by executing corresponding software by hardware. The hardware or the software includes one or more modules corresponding to the foregoing function. In a design, the apparatus may include a processing unit and a transceiver unit. For example, the transceiver unit is configured to receive second information from a relay device, where the second information includes a first paging parameter of a remote device. The processing unit is configured to perform SL communication configuration based on the second information. For more detailed descriptions of the processing unit and the transceiver unit, directly refer to related descriptions in the second aspect. For example, the processing unit is configured to perform DRX configuration of the relay device based on the second information. For another example, the transceiver unit is configured to send the first SL DRX configuration to the relay device. For beneficial effects of the fourth aspect and the possible designs, refer to descriptions of corresponding parts in the second aspect.

According to an eleventh aspect, a communication apparatus is provided. The apparatus may be a remote device, or may be a component (for example, a chip, a chip system, or a circuit) in the remote device. The apparatus has a function of implementing the method according to any one of the third aspect or the possible designs of the third aspect. The function may be implemented by hardware, or may be implemented by executing corresponding software by hardware. The hardware or the software includes one or more modules corresponding to the foregoing function. In a design, the apparatus may include a processing unit and a transceiver unit. For example, the processing unit is configured to invoke the transceiver unit to perform a receiving or sending operation. The transceiver unit further includes a receiving unit and a sending unit. The sending unit is configured to send first information to a relay device, where the first information includes a first paging parameter of the remote device. The receiving unit is configured to receive a first sidelink SL discontinuous reception DRX configuration from the relay device, where the first SL DRX configuration is determined based on second information, the second information includes the first paging parameter, and the first SL DRX configuration is used by the remote device to receive a first message from the relay device.

For more detailed descriptions of the processing unit, the receiving unit, and the sending unit, directly refer to related descriptions in the third aspect. For example, the sending unit is further configured to send a second SL DRX configuration to the relay device, where the second SL DRX configuration is determined based on the first SL DRX configuration, and the second SL DRX configuration is used by the remote device to send a second message to the relay device. For beneficial effects of the eleventh aspect and the possible designs, refer to descriptions of corresponding parts in the third aspect.

According to a twelfth aspect, a communication apparatus is provided. The apparatus may be a second network device, or may be a component (for example, a chip, a chip system, or a circuit) in the second network device. The second network device is a core network device of a remote device or an anchor gNB of the remote device, and a relay device may implement a relay forwarding function between a first network device and the remote device. The apparatus has a function of implementing the method according to any one of the fourth aspect or the possible designs of the fourth aspect. The function may be implemented by hardware, or may be implemented by executing corresponding software by hardware. The hardware or the software includes one or more modules corresponding to the foregoing function. In a design, the apparatus may include a processing unit and a transceiver unit. The processing unit is configured to invoke the transceiver unit to perform a receiving or sending operation. The transceiver unit further includes a receiving unit and a sending unit. For example, the receiving unit is configured to receive first request information from the first network device, where the first request information is for requesting cycle information. The sending unit is configured to send the cycle information to the first network device. The cycle information is for determining a first SL DRX configuration.

For more detailed descriptions of the processing unit, the receiving unit, and the sending unit, directly refer to related descriptions in the fourth aspect. For beneficial effects of the twelfth aspect and the possible designs, refer to descriptions of corresponding parts in the fourth aspect.

According to a thirteenth aspect, a communication apparatus is provided. The apparatus may be a second network device, or may be a component (for example, a chip, a chip system, or a circuit) in the second network device. The second network device is a core network device of a remote device or an anchor gNB of the remote device, and a relay device may implement a relay forwarding function between a first network device and the remote device. The apparatus has a function of implementing the method according to any one of the fifth aspect or the possible designs of the fifth aspect. The function may be implemented by hardware, or may be implemented by executing corresponding software by hardware. The hardware or the software includes one or more modules corresponding to the foregoing function. In a design, the apparatus may include a processing unit and a transceiver unit. The processing unit is configured to invoke the transceiver unit to perform a receiving or sending operation. The transceiver unit further includes a receiving unit and a sending unit. For example, the receiving unit is configured to receive second request information from the first network device, where the second request information is for requesting to configure an SL DRX configuration for the remote device. The sending unit is configured to send the first SL DRX configuration to the first network device.

For more detailed descriptions of the processing unit, the receiving unit, and the sending unit, directly refer to related descriptions in the fifth aspect. For beneficial effects of the thirteenth aspect and the possible designs, refer to descriptions of corresponding parts in the fifth aspect.

According to a fourteenth aspect, a communication apparatus is provided. The apparatus may be a relay device, or may be a component (for example, a chip, a chip system, or a circuit) in the relay device. The apparatus has a function of implementing the method in any one of the sixth aspect or the possible designs of the sixth aspect. The function may be implemented by hardware, or may be implemented by executing corresponding software by hardware. The hardware or the software includes one or more modules corresponding to the foregoing function. In a design, the apparatus may include a processing unit and a transceiver unit. For example, the receiving unit is configured to receive first information from a remote device, where the first information includes a first paging parameter of the remote device. The processing unit is configured to determine a first sidelink SL discontinuous reception DRX configuration based on the first information, where the first SL DRX configuration is used by the remote device to receive a first message from the relay device.

For more detailed descriptions of the processing unit and the transceiver unit, directly refer to related descriptions in the sixth aspect. For beneficial effects of the fourteenth aspect and the possible designs, refer to descriptions of corresponding parts in the sixth aspect.

According to a fifteenth aspect, a communication apparatus is provided. The apparatus may be a remote device, or may be a component (for example, a chip, a chip system, or a circuit) in the remote device. The apparatus has a function of implementing the method according to any one of the seventh aspect or the possible designs of the seventh aspect. The function may be implemented by hardware, or may be implemented by executing corresponding software by hardware. The hardware or the software includes one or more modules corresponding to the foregoing function. In a design, the apparatus may include a processing unit and a transceiver unit. For example, the transceiver unit is configured to receive fourth information from a relay device, where the fourth information includes DRX assistance information of the remote device. The processing unit is configured to determine a first SL DRX configuration based on the fourth information, where the first SL DRX configuration is used by the remote device to receive a first message from the relay device. For more detailed descriptions of the processing unit and the transceiver unit, directly refer to related descriptions in the seventh aspect. For example, the transceiver unit is further configured to send the first SL DRX configuration to the relay device. For beneficial effects of the fifteenth aspect and the possible designs, refer to descriptions of corresponding parts in the seventh aspect.

According to a sixteenth aspect, a communication apparatus is provided. The apparatus may be a relay device, or may be a component (for example, a chip, a chip system, or a circuit) in the relay device. The apparatus has a function of implementing the method according to any one of the eighth aspect or the possible designs of the eighth aspect. The function may be implemented by hardware, or may be implemented by executing corresponding software by hardware. The hardware or the software includes one or more modules corresponding to the foregoing function. In a design, the apparatus may include a processing unit and a transceiver unit. For example, the sending unit is configured to send fourth information to a remote device, where the fourth information includes DRX assistance information of the remote device. The processing unit is configured to determine a first SL DRX configuration based on the fourth information. Alternatively, the receiving unit is configured to receive a first SL DRX configuration from the remote device. The first SL DRX configuration is determined based on the fourth information, and the first SL DRX configuration is used by the remote device to receive a first message from the relay device.

For more detailed descriptions of the processing unit, the receiving unit, and the sending unit, directly refer to related descriptions in the eighth aspect. For example, the transceiver unit is further configured to send the first SL DRX configuration to the relay device. For beneficial effects of the sixteenth aspect and the possible designs, refer to descriptions of corresponding parts in the eighth aspect.

According to a seventeenth aspect, an embodiment of this application provides a communication apparatus, where the communication apparatus includes a memory and a processor, and the memory is configured to store one or more computer programs. When the one or more computer programs are run, the method described in the first aspect, the third aspect, the sixth aspect, the seventh aspect, the eighth aspect, or the possible designs of the aspects is performed. Optionally, the communication apparatus further includes an interface circuit, and the processor and the interface circuit are coupled to each other. The interface circuit is configured to receive a signal from another communication apparatus other than the communication apparatus, and transmit the signal to the processor, or send a signal from the processor to another communication apparatus other than the communication apparatus. It may be understood that the interface circuit may be a transceiver or an input/output interface.

Optionally, the memory is configured to store instructions executed by the processor, store input data required by the processor to run instructions, or store data generated after the processor runs instructions. The memory may be a physically independent unit, or may be coupled to the processor, or the processor includes the memory.

According to an eighteenth aspect, an embodiment of this application provides a communication apparatus, where the communication apparatus includes a memory and a processor, and the memory is configured to store one or more computer programs. When the one or more computer programs are run, the method described in the second aspect or the possible designs of the second aspect is performed. Optionally, the communication apparatus further includes an interface circuit, and the processor and the interface circuit are coupled to each other. The interface circuit is configured to receive a signal from another communication apparatus other than the communication apparatus, and transmit the signal to the processor, or send a signal from the processor to another communication apparatus other than the communication apparatus. It may be understood that the interface circuit may be a transceiver or an input/output interface.

Optionally, the memory is configured to store instructions executed by the processor, store input data required by the processor to run instructions, or store data generated after the processor runs instructions. The memory may be a physically independent unit, or may be coupled to the processor, or the processor includes the memory.

According to a nineteenth aspect, an embodiment of this application provides a communication apparatus, where the communication apparatus includes a memory and a processor, and the memory is configured to store one or more computer programs. When the one or more computer programs are run, the method described in the fourth aspect, the fifth aspect, or the possible designs of the two aspects is performed. Optionally, the communication apparatus further includes an interface circuit, and the processor and the interface circuit are coupled to each other. The interface circuit is configured to receive a signal from another communication apparatus other than the communication apparatus, and transmit the signal to the processor, or send a signal from the processor to another communication apparatus other than the communication apparatus. It may be understood that the interface circuit may be a transceiver or an input/output interface.

Optionally, the memory is configured to store instructions executed by the processor, store input data required by the processor to run instructions, or store data generated after the processor runs instructions. The memory may be a physically independent unit, or may be coupled to the processor, or the processor includes the memory.

According to a twentieth aspect, an embodiment of this application provides a computer-readable storage medium, where the computer-readable storage medium stores a computer program or readable instructions. When the computer program or the readable instructions are executed by a communication apparatus, the methods in the foregoing aspects or the possible designs of the aspects are performed.

According to a twenty-first aspect, an embodiment of this application provides a chip system. The chip system includes a processor, and may further include a memory. The memory is configured to store a program, instructions, or code. The processor is configured to execute the program, the instructions, or the code stored in the memory, to implement the methods in the foregoing aspects or the possible designs of the foregoing aspects. The chip system may include a chip, or may include a chip and another discrete component.

According to a twenty-second aspect, a computer program product including instructions is provided. When the instructions are executed by a communication apparatus, the methods in the foregoing aspects or the possible designs of the foregoing aspects are performed.

According to a twenty-third aspect, a communication system is provided, and includes the apparatus according to the ninth aspect, the fourteenth aspect, or the sixteenth aspect, the apparatus according to the tenth aspect, and the apparatus according to the eleventh aspect or the fifteenth aspect. Optionally, the communication system may further include the apparatus according to the twelfth aspect or the thirteenth aspect.

According to a twenty-fourth aspect, a communication system is provided, and includes the apparatus according to the seventeenth aspect, the apparatus according to the eighteenth aspect, and the apparatus according to the nineteenth aspect.

### BRIEF DESCRIPTION OF DRAWINGS

FIG. 1 is a schematic of an architecture of a communication system according to an embodiment of this application;
FIG. 2 is a schematic of forwarding paging by relay UE according to an embodiment of this application;
FIG. 3 is a schematic flowchart 1 of a sidelink communication method according to an embodiment of this application;
FIG. 4 is a schematic of a method for obtaining a first SL DRX configuration by a relay device according to an embodiment of this application;
FIG. 5 is a schematic flowchart 1 of a method for obtaining a first SL DRX configuration by a first network device according to an embodiment of this application;
FIG. 6 is a schematic flowchart 2 of a method for obtaining a first SL DRX configuration by a first network device according to an embodiment of this application;
FIG. 7 is a schematic flowchart 3 of a method for obtaining a first SL DRX configuration by a first network device according to an embodiment of this application;
FIG. 8 is a schematic flowchart 2 of a sidelink communication method according to an embodiment of this application;
FIG. 9 is a schematic flowchart 3 of a sidelink communication method according to an embodiment of this application;
FIG. 10 is a schematic flowchart of a method for determining a second SL DRX configuration according to an embodiment of this application;
FIG. 11 is a schematic 1 of a structure of a communication apparatus according to an embodiment of this application; and
FIG. 12 is a schematic 2 of a structure of a communication apparatus according to an embodiment of this application.

### DESCRIPTION OF EMBODIMENTS

Embodiments of this application provide a sidelink communication method, a communication apparatus, and a communication system, to perform SL communication configuration in a relay scenario. The method and the apparatus are based on a same technical concept or similar technical concepts. Because problem-resolving principles of the method and the apparatus are similar, mutual reference may be made to implementation of the apparatus and the method, and repeated parts are not described.

The sidelink communication method provided in embodiments of this application may be applied to a 4th generation (4th generation, 4G) communication system, for example, long term evolution (long term evolution, LTE), may be applied to a 5th generation (5th generation, 5G) communication system, for example, 5G new radio (new radio, NR), or may be applied to various future-evolved communication systems, for example, a 6th generation (6th generation, 6G) communication system, a space-air-sea-ground integrated communication system, or an integrated access and backhaul (integrated access and backhaul, IAB) scenario. It may be understood that the system architecture and the application scenario that are described in embodiments of this application are intended to describe the technical solutions in embodiments of this application more clearly, and do not constitute a limitation on the technical solutions provided in embodiments of this application.

It should be noted that in embodiments of this application, when a case in which "A" is determined based on "B" is described, it may be understood that "A" is determined based on "B", or it may be understood that "A" is determined based on "B" and other information. That "A" is determined based on "B" may be that "A" is determined based on a part or all of information about "B".

The following describes in detail embodiments of this application with reference to accompanying drawings.

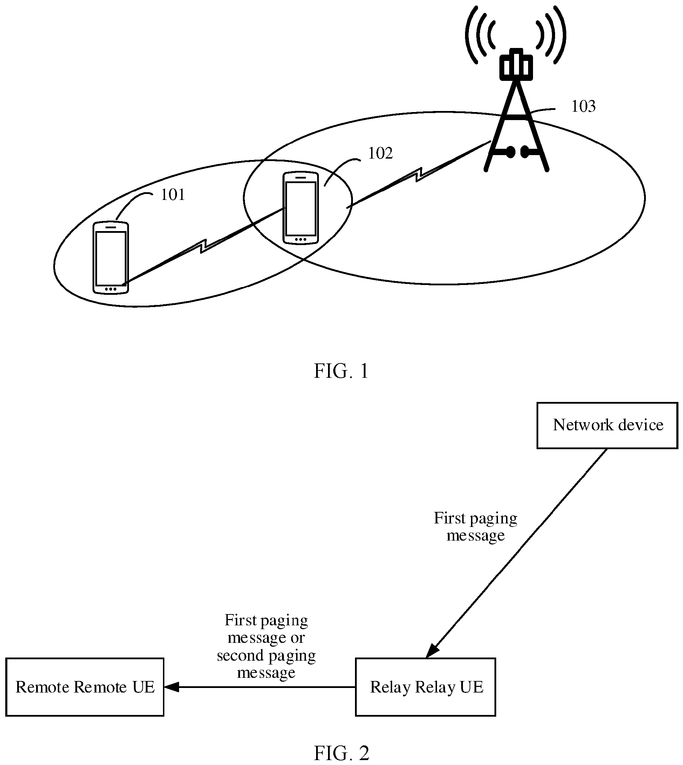

FIG. 1 is a schematic of an architecture of a communication system to which an embodiment of this application is applicable. The communication system includes two terminal devices, one is a remote device 101, and the other is a relay device 102. The communication system may further include a network device 103. The relay device 102 can implement a relay forwarding function. The remote device 101 and the relay device 102 may communicate with each other by using a sidelink. Optionally, the remote device 101 and the relay device 102 may also communicate with each other by using another relay device. When the remote device 101 is located outside coverage of the network device 103 or at an edge of the coverage, the remote device 101 and the network device 103 may communicate with each other by using the relay device 102. The relay device 102 may forward information from the network device 103 to the remote device 101, or may forward information from the remote device 101 to the network device 103. When forwarding the information, the relay device 102 may process the received information and then forward the information. For example, the relay device 102 receives first information of the network device 103, processes the first information to obtain second information, and sends the second information to the remote device 101. Coverage enhancement can be implemented by using a forwarding function of the relay device 102.

Both the remote device 101 and the relay device 102 may be terminal devices. The following describes a concept of the terminal device.

The terminal device in embodiments of this application may also be referred to as user equipment (user equipment, UE), a mobile station (mobile station, MS), a mobile terminal (mobile terminal, MT), or the like, and is a device that provides voice or data connectivity for a user, or may be an internet of things device. For example, the terminal device is a handheld device, a vehicle-mounted device, or the like that has a wireless connection function. The terminal device may be a mobile phone (mobile phone), a tablet computer, a notebook computer, a palmtop computer, a mobile internet device (mobile internet device, MID), a wearable device (for example, a smart watch, a smart band, or a pedometer), a vehicle-mounted device (for example, an automobile, a bicycle, an electric vehicle, an aircraft, a ship, a train, or a high-speed train), a virtual reality (virtual reality, VR) device, an augmented reality (augmented reality, AR) device, a wireless terminal in industrial control (industrial control), a smart home device (for example, a refrigerator, a television, an air conditioner, or an electricity meter), an intelligent robot, a workshop device, a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a flight device (for example, an intelligent robot, a hot balloon, an uncrewed aerial vehicle, or an aircraft), or the like. It should be understood that the terminal device in embodiments of this application may alternatively be a chip in the terminal device, or may be a communication apparatus, a unit, or a module that has a user equipment to user equipment (UE to UE, U2U) communication function, for example, a vehicle-mounted communication apparatus, a vehicle-mounted communication module, or a vehicle-mounted communication chip. In embodiments of this application, the terminal device may be a roadside unit (road side unit) in an internet of vehicles communication system, or a communication apparatus or a communication chip in the roadside unit. The method provided in embodiments of this application may be performed by a terminal device, or may be performed by a component (for example, a processor, a chip, or a chip system) of the terminal device. An entity that performs the method in embodiments of this application may also be referred to as a communication apparatus. The communication apparatus may be a terminal device or a component (for example, a processor, a chip, or a chip system) of the terminal device. For differentiation, a remote communication apparatus and a relay communication apparatus may be used for representation. The remote communication apparatus corresponds to the remote device, and the relay communication apparatus corresponds to the relay device.

The network device 103 may be a device in a radio access network, the radio access network may include one or more radio access network devices, and the network device 103 may be a radio access network device. The terminal device may be connected to the radio access network device in a wireless manner. The communication system may further include a core network (core network, CN), and the radio access network device is connected to the core network in a wireless or wired manner. A core network device and the radio access network device may be different independent physical devices, or functions of the core network device and logical functions of the radio access network device may be integrated into a same physical device, or some functions of the core network device and some functions of the radio access network device may be integrated into one physical device.

The radio access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like; or may be a module or a unit that completes some functions of the base station, for example, may be a central unit (central unit, CU), or may be a distributed unit (distributed unit, DU). The CU herein completes functions of a radio resource control protocol and a packet data convergence protocol (packet data convergence protocol, PDCP) of the base station, and may further implement functions of a service data adaptation protocol (service data adaptation protocol, SDAP). The DU completes functions of a radio link control layer and a media access control (medium access control, MAC) layer of the base station, and may further complete functions of a part or all of a physical layer. For specific descriptions of the foregoing protocol layers, refer to technical specifications related to the 3rd generation partnership project (3rd generation partnership project, 3GPP). The radio access network device may be a macro base station, may be a micro base station or an indoor base station, or may be a relay node, a donor node, or the like. A specific technique and a specific device form that are used by the radio access network device are not limited in embodiments of this application. In embodiments of this application, a function of the base station may be performed by a module (for example, a chip) in the base station, or may be performed by a control subsystem including the function of the base station. The control subsystem that includes a base station function herein may be a control center in an application scenario, such as a smart grid, industrial control, intelligent transportation, and a smart city. A function of the terminal may be performed by a module (for example, a chip or a modem) in the terminal, or may be performed by an apparatus including the function of the terminal. When a specific communication method is described in this application, an example in which a device implementing a base station function is a network device is used for description, and an example in which a device implementing a terminal function is a terminal device is used for description.

In this application, both the terminal device and the network device may be referred to as communication apparatuses. The remote device 101 and the relay device 102 in FIG. 1 may be referred to as communication apparatuses having a terminal device function, and the network device 103 may be referred to as a communication apparatus having a network device function.

When the terminal device is referred to as UE, the communication scenario shown in FIG. 1 may also be referred to as user equipment-to-network relay (UE to NW Relay, U2N Relay) communication.

U2N relay is a technology in which remote UE (Remote UE) communicates with a network by using relay UE (Relay UE). When a network coverage signal at a location of the remote UE is poor, or the remote UE is located outside network coverage, coverage enhancement can be implemented by using the relay UE. In the U2N relay communication scenario, remote UE communicates with each other by using a sidelink. When there is a data transmission requirement between the remote UE and the network, the relay UE may receive uplink data of the remote UE from a direct communication interface (for example, a PC5 interface), and forward the uplink data to an access network device by using a radio interface (for example, a Uu interface). Correspondingly, the relay UE receives downlink data of the remote UE from the Uu interface, and forwards the downlink data to the remote UE by using the PC5 interface. As shown in FIG. 2, when there is no data transmission requirement between the remote UE and the network, the relay UE may alternatively maintain a unicast connection to the remote UE, to help the remote UE listen to a paging message and page the remote UE by using a PC5 interface. The relay UE pages the remote UE by using the PC5 interface. The relay UE may forward a paging message from a network device, or may process a paging message from the network device. For example, the paging message received by the relay UE from the network device is denoted as a first paging message. The relay UE processes the first paging message to obtain a second paging message, and the relay UE sends the second paging message to the remote UE. For example, the first paging message may carry an identifier of the remote UE, and the second paging message obtained by the relay UE by processing the first paging message does not include the identifier of the remote UE. Even if an air interface directly connected to the remote UE is out of coverage (out of coverage, OOC), the remote UE may be paged by the network device. Optionally, the first paging message may be carried in an RRC message. For example, when the relay UE is in RRC connected mode, the network device may send the first paging message by using the RRC message.

To better understand the method provided in embodiments of this application, the following first describes a method for performing paging configuration on a terminal device by a network side.

From a perspective of a triggering mode, paging may include paging (core network paging, CN paging) triggered by the core network and paging (radio access network paging, RAN paging) triggered by an anchor gNB (anchor gNB). The core network or the anchor gNB sends a paging message to a related access network device when triggering paging. After receiving the paging message, the access network device sends the paging message to the terminal device. For ease of description, the access network device that sends the paging message to the terminal device is represented by a network device. One paging frame (paging Frame, PF) is one radio frame. One PF may include one or more paging occasions (paging occasions, POs). One PO may include a plurality of slots (slot), one PO may include one or more subframes, or one PO may include one or more orthogonal frequency division multiplexing (orthogonal frequency division multiplexing, OFDM) symbols. The network device sends the paging message through an air interface in a specific PO of a specific PF, and the terminal device attempts to receive the paging message in the specific PO of the specific PF. When the terminal device uses DRX, in a possible implementation, the terminal device can detect only one PO in one DRX cycle, and one DRX cycle is equivalent to one paging cycle.

The network device needs to perform paging configuration on the terminal device, and the terminal device receives the paging message based on the paging configuration. In an example, a paging parameter in the paging configuration is shown in the following Table 1.

**Table 1**

| Parameter | Description |
|---|---|
| T | DRX cycle |
| N | Quantity of PFs in each cycle T |
| Ns | Quantity of POs in each PF |
| PF_offset | Offset used for PF (offset used for PF) |
| UE_ID | 5G-S-TMSI in idle mode and I-RNTI in inactive mode |

The parameter T indicates a DRX cycle or a paging cycle. For a terminal device in idle mode, a value of T is min(specific DRX cycle, default DRX cycle). min(specific DRX cycle, default DRX cycle) indicates a minimum value of a specific DRX cycle (specific DRX cycle) and a default DRX cycle (default DRX cycle). For a terminal device in inactive mode, a value of T is min(specific DRX cycle, RAN paging cycle, default DRX cycle). min(specific DRX cycle, RAN paging cycle, default DRX cycle) indicates a minimum value of a specific DRX cycle (specific DRX cycle), a RAN (that is, a network device) paging DRX cycle (RAN paging cycle), and a default DRX cycle (default DRX cycle). The specific DRX cycle is a DRX cycle specific to a terminal device or UE, and the specific DRX cycle is a value configured by an upper layer. The RAN paging DRX cycle is a value configured by RRC. N indicates a quantity of PFs included in each cycle T. Ns indicates a quantity of POs included in each PF. The PF offset (PF_offset) indicates an offset used for the PF. UE_ID indicates an identifier of the terminal device. In idle mode, the identifier is a 5G system architecture evolution temporary mobile subscriber identity (SG-SAE-temporary mobile subscriber identity, 5G-S-TMSI). In inactive mode, the identifier is an inactive cell radio temporary identifier (inactive radio network temporary identifier, I-RNTI).

In the relay scenario, for example, in a U2N relay communication scenario, when the remote device is located at a coverage edge or outside coverage of the network device, the remote device may not listen to a paging (paging) message on an air interface. In this case, the relay device may help the remote device listen to the paging message. In a first optional design, the relay device may forward the paging message to the remote device by using a sidelink (sidelink, SL), and the remote device receives, by using the SL, the paging message forwarded by the relay device. In a second optional design, the relay device may help the remote device listen to the paging message in the following manner: The relay device receives a paging message from the network device, and the paging message is denoted as a first paging message; the relay device processes the first paging message to obtain a second paging message; the relay device sends the second paging message to the remote device; and the remote device receives the second paging message from the relay device. For example, the first paging message may carry an identifier of the remote device, and the second paging message obtained by the relay device by processing the first paging message does not include the identifier of the remote device. In this application, the first design is used as an example of a manner in which the relay device helps the remote device listen to the paging message in the relay scenario. To be specific, the relay device forwards the paging message from the network device to the remote device. It may be understood that, when an embodiment in which the relay device forwards the paging message is involved, the method may also be applied to the second optional design. In the relay scenario, the network device performs SL communication configuration for the relay device or the remote device, and the SL communication configuration may be, for example, an SL transmission resource configuration. For example, the network device configures an SL transmission resource for the relay device. The SL transmission resource is used by the relay device to send data to the remote device, or may be used by the relay device to receive data from the remote device. The network device may configure the SL transmission resource for the relay device based on downlink buffer data and/or based on a BSR received from the relay device. This SL communication configuration manner has a large delay, is not conducive to a remote device having a high delay requirement, and reduces SL communication quality.

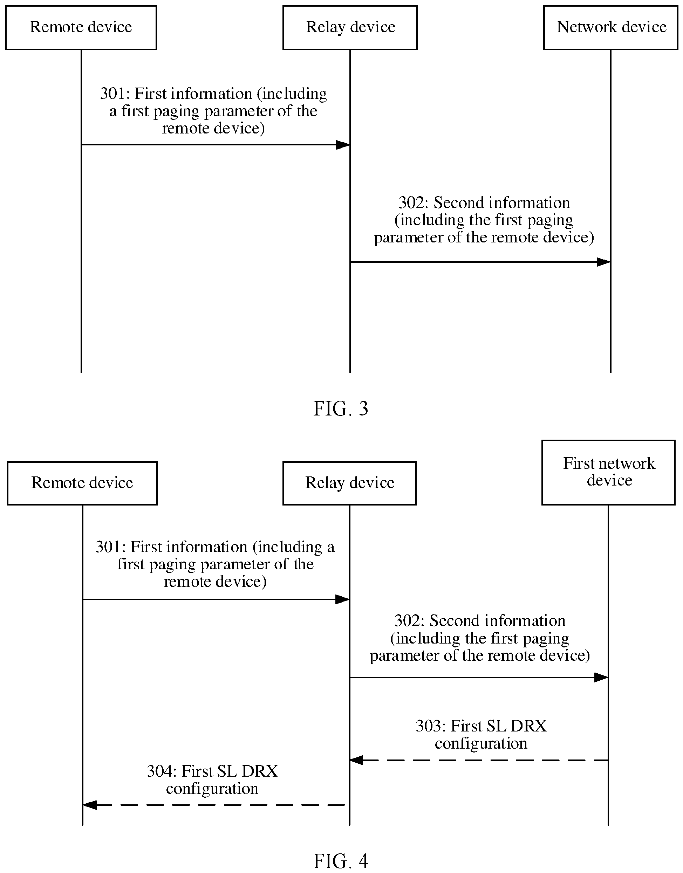

Based on this, an embodiment of this application provides a sidelink communication method. As shown in FIG. 3, a procedure of the sidelink communication method provided in this embodiment of this application is described as follows:

S301: A remote device sends first information to a relay device. Correspondingly, the relay device receives the first information from the remote device.

The first information includes a first paging parameter of the remote device. The first paging parameter may include some or all parameters for determining a paging configuration of the terminal device. The parameter for determining the paging configuration of the terminal device may be, for example, the paging parameter shown in Table 1.

S302: The relay device sends second information to a network device. Correspondingly, the network device receives the second information from the relay device.

The second information includes the first paging parameter of the remote device.

The remote device sends the first paging parameter of the remote device to the relay device, and the relay device sends the first paging parameter to the network device, so that the network device can obtain the first paging parameter of the remote device, and perform SL communication configuration based on the first paging parameter. The SL communication configuration may be a related SL communication configuration of the remote device or a related SL communication configuration of the relay device. A first network device performs SL communication configuration based on the first paging parameter, to help improve quality of SL communication between the relay device and the remote device and improve scheduling flexibility of the network device. The SL communication configuration may be an SL configured grant of the relay device, the SL configured grant is for configuring an SL transmission resource for the relay device, and the SL transmission resource is used by the relay device to send a message to the remote device. The SL configured grant is configured for the relay device by using the SL communication configuration, to prevent the relay device from requesting the SL transmission resource only after sending a BSR. This can reduce a delay of forwarding a message from the first network device by the relay device to the remote device. The network device may further perform DRX configuration of the relay device based on the second information. The DRX configuration of the relay device is used by the relay device to receive a network-side message through an air interface. The first network device may determine, based on the second information, time when a paging message is delivered, so that time when the relay device starts to attempt to receive the paging message through the air interface can be configured based on the second information. The paging message may be transmitted by using RRC dedicated signaling.

In a communication scenario in which the relay device forwards the paging message to the remote device, the paging message is used by a network side to page the remote device. In time domain, the network side sends the paging message on one PO in a paging cycle, and the relay device attempts to receive the paging message at a moment corresponding to the PO in the paging cycle, and forwards the paging message to the remote device. It can be learned that the paging message used by the network side to page the remote device is sent at some moments. If the remote device always receives the paging message of the relay device, power consumption of the remote device is wasted.

Based on this, the remote device may discontinuously receive the paging message from the relay device. Correspondingly, the relay device discontinuously sends the paging message to the remote device. Discontinuous reception refers to receiving a message in an on (on) period and stopping receiving the message in an off (off) period in a DRX cycle. The on (on) period is also referred to as active time (active time). Correspondingly, discontinuous sending refers to sending a message in an on (on) period and stopping sending the message in an off (off) period in a DRX cycle.

The remote device may discontinuously receive a message based on an SL DRX configuration, and the relay device may discontinuously send a message based on the SL DRX configuration. In a communication scenario in which the relay device helps the remote device listen to the paging message, the relay device sends the paging message to the relay device based on the SL DRX configuration, and the remote device receives the paging message from the relay device based on the SL DRX configuration. In this communication scenario, the SL DRX configuration may be determined based on a paging configuration.

To distinguish from another SL DRX configuration, an SL DRX configuration for SL communication between the remote device and the relay device may be denoted as a first SL DRX configuration. The SL communication configuration may further include the first SL DRX configuration. The first SL DRX configuration may be used by the relay device to send a first message to the remote device, or the first SL DRX configuration may be used by the remote device to receive the first message from the relay device. The first SL DRX configuration is an SL configuration of the relay device serving as transmitter UE (TX-UE).

The first message may be for paging the remote device. The relay device receives the paging message from the first network device. The paging message is a paging message initiated by the network side for the remote device. The relay device may forward the paging message to the remote device. Alternatively, the relay device may process the paging message, which may change content of the paging message. The first message sent to the remote device is not necessarily a paging message that is transparently forwarded from the network side, provided that the first message has a function of indicating to page the remote device. For example, the first message may be a paging indication. Certainly, the first message may also be referred to as a paging message.

Alternatively, the first message may be a message of another type. For example, the first message may be data received by the remote device from the relay device. For another example, the first message may alternatively be an SI message.

The following describes a method for determining the first SL DRX configuration and methods for obtaining the first SL DRX configuration by the remote device and the relay device by using examples.

Implementation A: A transmitter (TX UE) of the first message indicates the first SL DRX configuration to a receiver (RX UE). The transmitter of the first message is the relay device, and the receiver of the first message is the remote device. The relay device indicates the first SL DRX configuration to the remote device.

Implementation B: A receiver of the first message indicates the first SL DRX configuration to a transmitter. In other words, the remote device indicates the first SL DRX configuration to the relay device.

Based on the implementation A, a method for obtaining the first SL DRX configuration by the relay device may be implemented in the following manner a or manner b.

Manner a: The relay device may obtain the first SL DRX configuration by using the accessed first network device. In the manner a, the relay device may be in RRC connected mode.

Manner b: The relay device determines the first SL DRX configuration. In the manner b, the relay device may be in RRC idle mode or RRC inactive mode.

Based on the embodiment in FIG. 3, as shown in FIG. 4, in the manner a, after S302, S303 and S304 may be further included.

S303: The network device sends the SL DRX configuration to the relay device, where the network device may be denoted as the first network device. Correspondingly, the relay device receives the first SL DRX configuration from the first network device.

Optionally, the first SL DRX configuration may be a multicast or broadcast SL DRX configuration.

S304: The relay device sends a first SL DRX configuration to the remote device. Correspondingly, the remote device receives the first SLDRX configuration from the relay device.

Optionally, the first SL DRX configuration in S304 may be different from the first SL DRX configuration in S303. For example, the first SL DRX configuration in S303 is based on an SFN, and the first SL DRX configuration in S304 is based on a DFN. The first SL DRX configuration may include information indicating a first SL DRX on-duration timer. The relay device may obtain a start moment of the first SLDRX on-duration timer (Sl-drx-onDurationTimer) by performing calculation according to a related formula of the SFN and the DFN. For example, the relay device knows a value of the SFN and a value of the DFN at a current moment, and may obtain the following relational expression: DFN+SFN-DFN→DFN+ (SFN-DFN)→DFN+offset, where the offset is a difference between the SFN and the DFN at a same moment. Optionally, when a synchronization source of the remote device is a global navigation satellite system (global navigation satellite system, GNSS) or when the remote device is in an OOC state, the relay device may determine the first SL DRX configuration based on a relationship between the SFN and the DFN in S303.

Optionally, the first SL DRX configuration is carried in a PC5-RRC message.

Optionally, the first SL DRX configuration is carried in a broadcast or multicast message. It may be understood that, in this case, the multicast or broadcast message may be associated with a specific source L2 ID and/or a specific destination L2 ID, and the remote device may determine, based on the specific source L2 ID and/or the specific destination L2 ID, that the received message is a paging message sent by the relay device, to perform subsequent processing on the paging message.

In the manner a, a method for obtaining the first SL DRX configuration by the first network device may be implemented in any one of the following manner 1, manner 2, or manner 3.

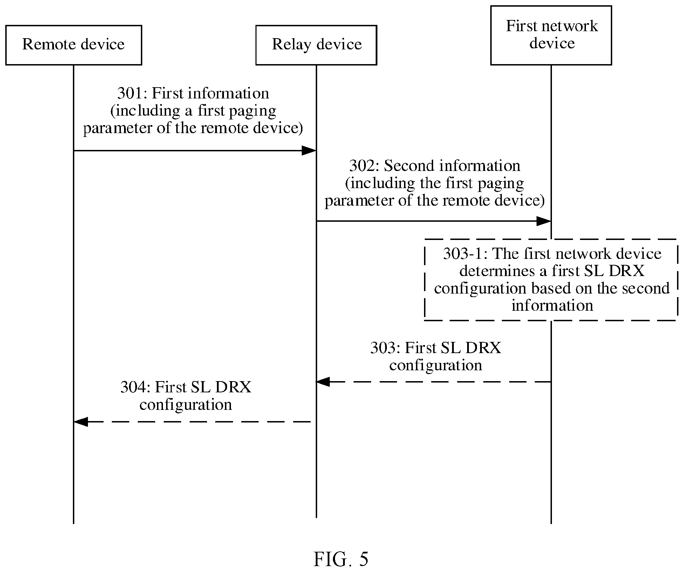

Based on the embodiment in FIG. 4, as shown in FIG. 5, in the manner 1, after S302 and before S303, S303-1 may be further included.

S303-1: The first network device determines the first SL DRX configuration based on the second information.

The first SL DRX configuration may include or indicate one or more of the following parameters: the first SL DRX on-duration timer (Sl-drx-onDurationTimer), a first SL DRX cycle (Sl-drx-cycle), a first SL DRX start offset (Sl-drx-StartOffset), or a first SL DRX slot offset (Sl-drx-SlotOffset). The first SL DRX start offset or the first SL DRX slot offset is for determining the start moment of the first SL DRX on-duration timer. The first SL DRX cycle is a cycle in which the relay device sends the first message to the remote device. In one first SL DRX cycle, the relay device sends the first message to the remote device in an on (on) period, and stops sending the first message in an off (off) period. The on (on) period is also referred to as active time (active time). After receiving the first SL DRX configuration, the remote device may attempt, based on the first SL DRX cycle in the first SL DRX configuration, to receive the first message from the relay device in the on (on) period and stop receiving the first message in the off (off) period.

The first SL DRX configuration may further include or indicate another parameter, for example, a first SL DRX inactivity timer (Sl-drx-InactivityTimer), a first SL DRX retransmission waiting timer (Sl-drx-HARQ-RTT-Timer), or a first SL DRX retransmission scheduling timer (Sl-drx-RetransmissionTimer).

Some parameters in the first SL DRX configuration may be determined based on the second information, and some other parameters in the first SL DRX configuration may be determined based on PCCH-config. PCCH-config may be information in a system information block 1 (system information block, SIB1). PCCH-config may include one or more parameters such as default DRX cycle, N, Ns, and PF_offset in Table 1. The first network device may determine the first SL DRX configuration based on the second information in combination with PCCH-config.

The following describes, by using an example, a method for determining the first SL DRX configuration by the first network device based on the second information.

The first paging parameter in S301 and S302 may include one or more of a first identifier of the remote device or cycle information.

The first identifier of the remote device (for example, the UE ID in Table 1) and the first identifier of the remote device may be a 5G-S-TMSI or an I-RNTI, or may be an identifier generated based on the 5G-S-TMSI or the I-RNTI. The first identifier (UE ID) of the remote device may be for determining a PF or a PO in the paging configuration, and the first SL DRX configuration may be determined based on the PF or the PO. For example, the first SL DRX configuration may include or indicate the start moment of the first SL DRX on-duration timer, and the start moment of the first SLDRX on-duration timer may be determined based on a start moment of the PF or the PO. The first SL DRX configuration may further include or indicate duration of the first SL DRX on-duration timer. The duration of the first SL DRX on-duration timer is the same as duration of the PO of the remote device, or the duration of the first SL DRX on-duration timer is greater than duration of the PO of the remote device.

The cycle information may include one or more of the following (1) to (8):
(1) The cycle information is a specific DRX cycle (specific DRX cycle). For example, the first paging parameter includes the cycle information only when the dedicated DRX cycle is less than a default DRX cycle (default DRX cycle). Otherwise, the first paging parameter does not include the cycle information. In this way, signaling overheads can be reduced.
(2) The cycle information is a RAN paging cycle (RAN paging cycle). For example, the first paging parameter includes the cycle information only when the RAN paging cycle is less than the default DRX cycle. Otherwise, the first paging parameter does not include the cycle information. In this way, signaling overheads can be reduced.
(3) The cycle information is the default DRX cycle.
(4) The cycle information is a minimum value of the specific DRX cycle and the RAN paging cycle.
(5) The cycle information is a minimum value of the specific DRX cycle, the RAN paging cycle, and the default DRX cycle.
(6) The cycle information is a minimum value of the specific DRX cycle and the default DRX cycle.
(7) The cycle information is indication information, and the indication information indicates whether a cycle is the same as a cycle of the terminal device in idle mode, that is, indicates whether the cycle is the same as a minimum value of the specific DRX cycle and the default DRX cycle.
(8) The cycle information is PF information and/or PO information of the remote device.

It should be noted that when the first paging parameter includes the cycle information, the cycle information sent by the remote device to the relay device may be any one of (1) to (8), and the cycle information sent by the relay device to the network device may be any one of (1) to (8). The cycle information sent by the relay device to the network device may be the same as or different from the cycle information sent by the remote device to the relay device. When the cycle information is different, the relay device receives the first cycle information sent by the remote device, and the relay device sends the second cycle information to the network device. For example, the first cycle information is the foregoing (1), and the second cycle information is the foregoing (4). In this application, an example in which the cycle information sent by the relay device to the network device is the same as the cycle information sent by the remote device to the relay device may be used for description. It may be understood that a solution related to cycle information transmission may be extended as follows: The relay device receives the first cycle information sent by the remote device, and the relay device sends the second cycle information to the network device. For example, the first paging parameter in S301 includes the first cycle information, and the first paging parameter in S302 includes the second cycle information.

The paging cycle of the remote device may be determined based on the cycle information in the first paging parameter in S302. The first SL DRX cycle may be determined based on the paging cycle of the remote device. For example, the first SL DRX cycle is the same as the paging cycle of the remote device. For another example, the first SL DRX cycle may be an integer multiple of the paging cycle of the remote device. The active time period in the paging cycle of the remote device may be included in an active time period in the first SL DRX cycle, that is, the paging message is sent in an SL DRX receiving time period. The SL DRX receiving time period is a time period in which the remote device receives the first message from the relay device.

The first information in S301 may be referred to as DRX assistance information. After receiving the first information, the relay device may determine a paging configuration of the remote device based on the first paging parameter of the remote device in the first information, and determine, based on the paging configuration of the remote device, a moment for helping the remote device listen to the paging message sent by the network device. It may be understood that, because the relay device is within the coverage of the first network device, the relay device may further obtain, from system information or a broadcast message of the first network device, another paging parameter for determining the paging configuration, for example, PCCH-config, and determine the paging configuration based on the another paging parameter and the first paging parameter in the first information. In a possible design, the first paging parameter in S301 may include some or all of parameters for determining the paging configuration of the terminal device. To be specific, when the first information is for determining the paging configuration, the first information may indicate some or all of the paging parameters for determining the paging configuration. When the first information indicates some of the paging parameters for determining the paging configuration, the relay device may obtain, from the system information or the broadcast message of the first network device, another paging parameter for determining the paging configuration. When the first information indicates all of the paging parameters for determining the paging configuration, in addition to parameters that cannot be obtained by the terminal device from the first network device, the first information may further carry another paging parameter for determining the paging configuration.

The first network device determines the first SL DRX configuration based on the first paging parameter of the remote device in the second information. When the first SL DRX configuration is for receiving the paging message, the first SL DRX configuration may be determined based on the first paging parameter.

Optionally, the second information may further include some other information for determining the first SL DRX configuration.

For example, the second information may further include delay information. The delay information indicates a first delay of forwarding a message from the first network device by the relay device to the remote device. The message may be, for example, a paging message. Different first delays may be caused by different messages forwarded by the relay device to the remote device. In this application, the first delay may be a forwarding delay of a specific message, for example, a forwarding delay of a paging message. After receiving the message from the first network device, the relay device processes the message for a period of time, and forwards a processed message to the relay device, where the period of time is a value corresponding to the first delay. When the first message forwarded by the relay device is a paging message, the first delay is a processing delay from receiving the paging message by the relay device through an air interface to forwarding the paging message through PC5. The start moment of the first SL DRX on-duration timer may be determined based on the first delay. For example, a difference between the start moment of the first SL DRX on-duration timer and a start moment of the PO of the remote device is less than or equal to the first delay. For example, the first delay is 0.5 second, and the start moment of the PO of the remote device is the 1^{st} second. To be specific, the relay device needs to attempt to receive the paging message of the remote device at the 1^{st} second, and the first delay for processing the paging message by the relay device is 0.5 second. In this case, the remote device needs to attempt to receive the paging message from the relay device at the 1.5^{th} second, or the remote device needs to attempt to receive the paging message from the relay device before the 1.5^{th} second.

For another example, the second information may further include a time interval between the SFN and the DFN. The SFN is air interface frame numbers of the relay device and the first network device, and is configured by the first network device for a served terminal device. Because the remote device may be outside the coverage of the first network device, the remote device may not know the SFN. The DFN is a frame number synchronized with the global positioning system (global positioning system, GPS). The time interval between the SFN and the DFN may be a frame (frame) granularity, a subframe (subframe) granularity, a slot (slot) granularity, or a symbol (symbol) granularity. The second information carries the time interval between the SFN and the DFN, so that the first network device can configure the first SL DRX configuration based on the time interval. For example, the difference between the start moment of the first SL DRX configuration on-duration timer and the start moment of the PO of the remote device is less than or equal to a first value. The first value may be a value determined by the first delay and the time interval. For example, the first value is a sum of the first delay and the time interval, or the first value is a difference between the first delay and the time interval. Optionally, if the second information does not include the time interval between the SFN and the DFN, the remote device may perform switching on the first SL DRX configuration. For example, the remote device may switch a first SL DRX configuration that is based on the SFN into a first SL DRX configuration that is based on the DFN.

The second information may further include a destination identifier (destination ID), and the second information may further include a local identifier (local ID). Both the destination ID and the local ID may indicate a specific remote device. For example, when the relay device implements a relay function for a plurality of remote devices, the destination identifier and/or the local identifier may indicate one of the plurality of remote devices.

The second information may be carried in a sidelink user information (sidelink UE information, SUI) message.

In this case, the method for obtaining the first SL DRX configuration by the first network device in the manner 1 is described.

The following describes a method for obtaining the first SL DRX configuration by the first network device in the manner 2.

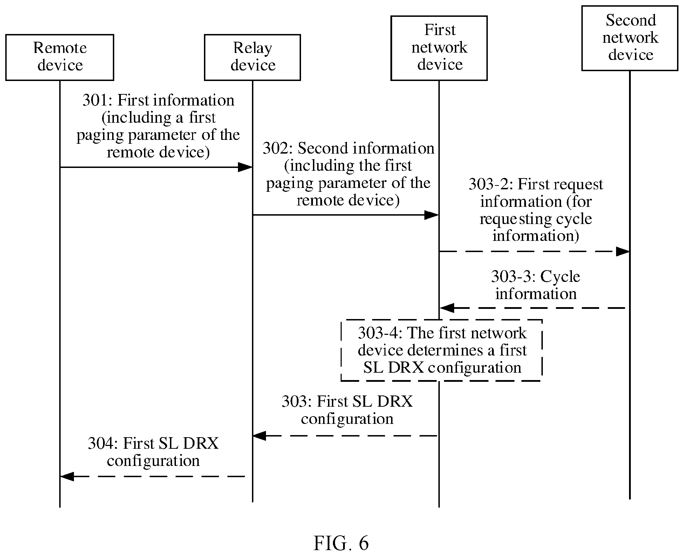

Based on the embodiment in FIG. 4, as shown in FIG. 6, in the manner 2, after S302 and before S303, S303-2, S303-3, and S304 may be further included.

S303-2: The first network device sends first request information to a second network device. Correspondingly, the second network device receives the first request information from the first network device.

The second network device is a core network device of the remote device or an anchor gNB of the remote device. The first request information is for requesting cycle information.

S303-3: The second network device sends the cycle information to the first network device. Correspondingly, the first network device receives the cycle information from the second network device.

For the cycle information, refer to the concept described in the foregoing manner 1, and the cycle information may be any one of the foregoing (1) to (8).

S303-4: The first network device determines the first SL DRX configuration.

In the manner 2 in the embodiment in FIG. 6, the first paging parameter in S301 and S302 may not carry the cycle information, and the first network device needs to request the cycle information from the second network device. The first paging parameter in S301 and S302 may carry a first identifier of the remote device, the first request information carries the first identifier of the remote device, and the second network device determines the cycle information based on the first identifier of the remote device.

For a manner of determining the first SL DRX configuration in 5303-4, refer to the foregoing description of S303-1. Details are not described herein again. It may be understood that, in S303-1, the first network device determines the first SLDRX configuration based on the second information. In a possible manner, the second information in S303-4 may not carry cycle information, and the first network device determines the first SL DRX configuration based on the second information and the cycle information received from the second network device. Optionally, when the second information carries cycle information in 5303-4, the first network device may also request the cycle information from the second network device, and the first network device may verify whether the cycle information in the second information is consistent with the cycle information requested from the second network device, and determine that the final cycle information is for determining the first SL DRX configuration. For example, if the two pieces of cycle information are consistent, the consistent cycle information is the final cycle information. If the two pieces of cycle information are inconsistent, either of the cycle information in the second information or the cycle information requested from the second network device may be used as the final cycle information.

With reference to the manner 1 and the manner 2, the first network device may determine the first SL DRX configuration based on one or more of the following parameters: the first identifier of the remote device, the cycle information, the delay information, the time interval between the SFN and the DFN, the destination identifier (destination ID), or the local identifier (local ID). The second information may carry all parameters for determining the first SL DRX configuration, and the first network device may determine the first SL DRX configuration based on the second information received from the relay device. Alternatively, the second information may carry some parameters for determining the first SL DRX configuration, and the first network device may determine the first SLDRX configuration based on the second information and another parameter. For example, the first network device may determine the first SL DRX configuration based on the second information received from the relay device and the cycle information received from the second network device.

The following describes a method for obtaining the first SL DRX configuration by the first network device in the manner 3.

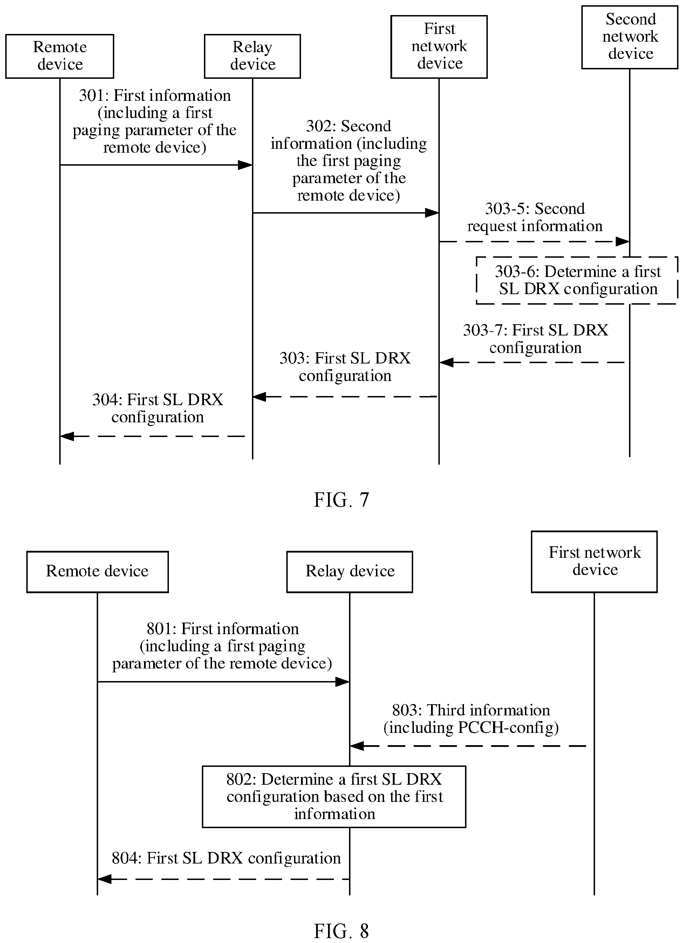

Based on the embodiment in FIG. 4, as shown in FIG. 7, in the manner 3, after S302 and before S303, S303-5, S303-6, and S307 may be further included.

S303-5: The first network device sends second request information to a second network device. Correspondingly, the second network device receives the second request information from the first network device.

The second network device is a core network device of the remote device or an anchor gNB of the remote device. The second request information is for requesting the first SL DRX configuration.

S303-6: The second network device determines the first SL DRX configuration.

S303-7: The second network device sends the first SL DRX configuration to the first network device. Correspondingly, the first network device receives the first SL DRX configuration from the second network device.

In the manner 3, the second network device determines the first SL DRX configuration, and the first network device may not need to obtain the cycle information. The second request information may carry the first identifier of the remote device, and is used by the second network device to determine the first SL DRX configuration. The second request information may further carry another parameter, so that the second network device determines the first SL DRX configuration. For example, the second request information may further carry any one or more of the delay information, the time interval between the SFN and the DFN, or PCCH-config. The second request information may further carry one or more parameters, other than the cycle information, carried in the second information described in the manner 1. For concepts and functions of parameters such as the delay information, the time interval between the SFN and the DFN, or PCCH-config, refer to descriptions in the foregoing manner 1. Details are not described herein again.

For a process in which the second network device determines the first SL DRX configuration, refer to the process in which the first network device determines the first SL DRX configuration. For this part, refer to related descriptions in the foregoing manner 1. Details are not described herein again.

The foregoing describes the method for obtaining the first SL DRX configuration by the relay device in the manner a. The following describes a method for obtaining the first SL DRX configuration by the relay device in the manner b.

Based on a same technical concept as the embodiment in FIG. 3, as shown in FIG. 8, an embodiment of this application provides another sidelink communication method. In the another sidelink communication method shown in FIG. 8, a relay device obtains a first SL DRX configuration in the manner b.

S801: A remote device sends first information to the relay device. Correspondingly, the relay device receives the first information from the remote device. The first information includes a first paging parameter of the remote device.

S801 is the same as S301. For details, refer to the descriptions of S301.

S802: The relay device determines the first SL DRX configuration based on the first information.

For a process in which the relay device determines the first SL DRX configuration, refer to the process in which the first network device determines the first SL DRX configuration in S303-1. Details are not repeated. It should be noted that: In S303-1, the first network device determines the first SL DRX configuration based on the second information, where the second information includes the first paging parameter in the first information, and further includes some parameters such as the delay information and the time interval between the SFN and the DFN. In S802, the relay device obtains the first paging parameter in the first information from the remote device, and knows some parameters such as delay information and a time interval between an SFN and a DFN, and therefore, can refer to the method for determining the first SL DRX configuration by the first network device in S303-1.

In addition, in S303-1, the first network device may further determine some parameters in the first SL DRX configuration based on PCCH-config, the first network device can determine the paging configuration of the remote device based on the second information and PCCH-config, and the first network device determines the first SL DRX configuration based on the paging configuration. Based on this, the embodiment in FIG. 8 may further include S803 after S801 and before S802.

S803: A first network device sends third information to the relay device. Correspondingly, the relay device receives the third information from the first network device.

The third information includes PCCH-config. When determining the first SL DRX configuration based on the first information, the relay device may determine the first SL DRX configuration based on the first information and the third information.

The third information may be carried in a system information block (system information block, SIB) 1 or system information (SI).

Optionally, the embodiment in FIG. 8 further includes S804.

S804: The relay device sends the first SL DRX configuration to the remote device. Correspondingly, the remote device receives the first SLDRX configuration from the relay device.

The following describes an optional embodiment of implementation B (that is, the remote device indicates the first SL DRX configuration to the relay device).

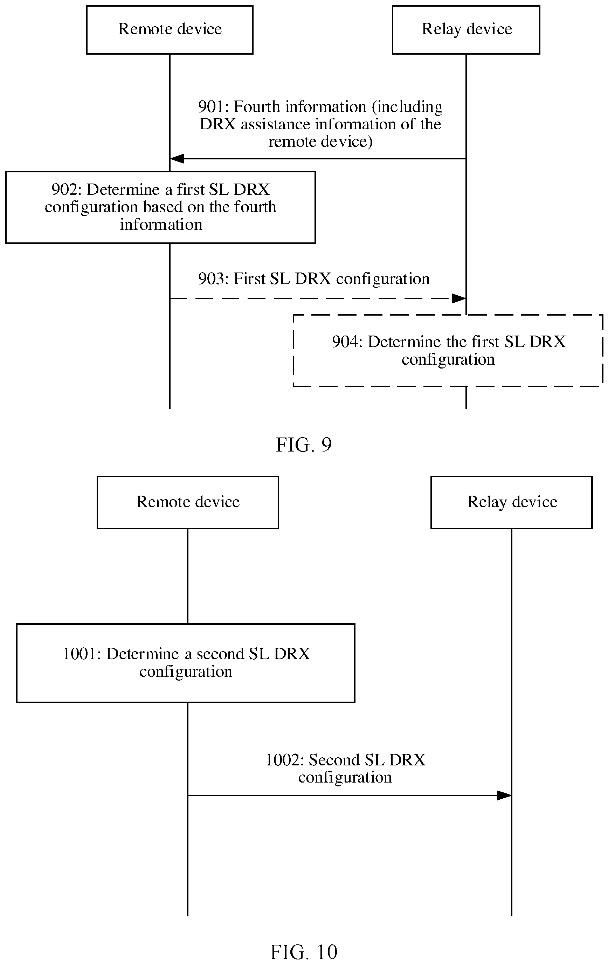

Based on a same technical concept as the embodiment in FIG. 3, as shown in FIG. 9, an embodiment of this application provides still another sidelink communication method. In the sidelink communication method shown in FIG. 9, a remote device indicates a first SL DRX configuration to a relay device.

S901: The relay device sends fourth information to the remote device. Correspondingly, the remote device receives the fourth information from the relay device.

The fourth information includes DRX assistance information of the remote device.

S902: The remote device determines the first SL DRX configuration based on the fourth information.

For a process in which the remote device determines the first SL DRX configuration, refer to the process in which the first network device determines the first SL DRX configuration in S303-1. Details are not repeated. It should be noted that, as described in S303-1, the parameter for determining the first SL DRX configuration may include the first paging parameter included in the second information, may further include some parameters such as the delay information and/or the time interval between the SFN and the DFN that are included in the second information, and may further include PCCH-config. In S902, a parameter known to the remote device includes a first paging parameter, for example, a first identifier of the remote device and cycle information. When determining the first SLDRX configuration based on a parameter other than the first paging parameter, the remote device may obtain the DRX assistance information from the relay device. The DRX assistance information may include delay information, may further include a time interval between an SFN and a DFN, and may further include PCCH-config. For definitions and functions of parameters such as the delay information, the time interval between the SFN and the DFN, and PCCH-config, refer to related descriptions in the foregoing manner 1. Details are not described herein again. On a basis that the remote device knows the first identifier of the remote device and the cycle information, and obtains the DRX assistance information, the remote device may determine the first SL DRX configuration with reference to the method for determining the first SL DRX configuration by the first network device in S303-1.

Optionally, after S902, the method may further include S903 or S904.

S903: The remote device sends the first SL DRX configuration to the relay device.

S904: The relay device determines the first SL DRX configuration.

The remote device may notify the relay device of the first SL DRX configuration determined by the remote device, or the relay device may determine the first SL DRX configuration by itself. For a method for determining the first SL DRX configuration by the relay device, refer to the foregoing manner 1, manner 2, or manner 3.

After both the remote device and the relay device obtain the first SL DRX configuration, the relay device sends a first message to the remote device based on the first SL DRX configuration, and the relay device receives the first message from the relay device based on the first SL DRX configuration.

After receiving the first message, the remote device may send a second message to the relay device, where the second message may be a response message of the first message. If the relay device is always ready to receive the second message, power consumption of the relay device is wasted. Based on this, the relay device may discontinuously receive the second message from the remote device. Correspondingly, the remote device discontinuously sends the second message to the relay device. The relay device may discontinuously receive the second message based on a second SL DRX configuration, and the remote device may discontinuously send the second message based on the second SL DRX configuration.

The second SL DRX configuration may be determined by a transmitter (namely, the remote device) of the second message, and indicated to a receiver (namely, the relay device) of the second message. Alternatively, the second SL DRX configuration may be determined by a receiver (namely, the relay device) of the second message, and indicated to a transmitter (namely, the remote device) of the second message. The following uses the first manner as an example for description.

As shown in FIG. 10, a procedure of a method for determining a second SL DRX configuration is as follows:

S1001: A remote device determines a second SL DRX configuration.

S1002: The remote device sends the second SL DRX configuration to a relay device.

Correspondingly, the relay device receives the second SL DRX configuration from the remote device.

The second SL DRX configuration is used by the relay device to receive a second message from the remote device. When a first message is a paging message, the second message is a response message of the paging message. The second message may be an RRC setup request (RRCSetupRequest) message, or the second message may be an RRC resume request (RRCResumeRequest) message. The second message may alternatively be a message carried on an SL-signaling radio bearer (signaling radio bearer, SRB).

The second SL DRX configuration may be carried in a PC5-RRC message. It may be understood that, if the remote device determines a first SL DRX configuration (for example, the embodiment in FIG. 9), this embodiment may be combined with the embodiment in FIG. 10. To be specific, the remote device determines the first SL DRX configuration and the second SL DRX configuration, and the remote device sends the first SL DRX configuration and the second SL DRX configuration to the relay device. The first SL DRX configuration and the second SL DRX configuration may be carried in a same message, or certainly may be carried in different messages.

The second SL DRX configuration may be determined based on the first SL DRX configuration. It may be understood that, the second SL DRX configuration is not limited to be determined based only on the first SLDRX configuration. In a possible implementation, the second SL DRX configuration may be determined based on the first SL DRX configuration and other information. That the second SL DRX configuration is determined based on the first SL DRX configuration may include that the second SL DRX configuration is determined based on some or all of information about the first SL DRX configuration.

The second SL DRX configuration may include or indicate one or more of the following parameters: a second SL DRX on-duration timer (Sl-drx-onDurationTimer), a second SL DRX cycle (Sl-drx-cycle), a second SL DRX start offset (Sl-drx-StartOffset), or a second SL DRX slot offset (Sl-drx-SlotOffset). The second SL DRX cycle is a cycle in which the remote device sends the second message to the relay device. In one second SL DRX cycle, the remote device sends the second message to the relay device in an on (on) period, and stops sending the second message in an off (off) period. The on (on) period is also referred to as active time (active time). After receiving the second SL DRX configuration, the remote device may attempt, based on the second SL DRX cycle in the second SL DRX configuration, to receive the second message from the remote device in the on (on) period and stop receiving the second message in the off (off) period.

The second SL DRX configuration may further include or indicate another parameter, for example, a second SL DRX inactivity timer (Sl-drx-InactivityTimer), a second SL DRX retransmission waiting timer (Sl-drx-HARQ-RTT-Timer), or a second SL DRX retransmission scheduling timer (Sl-drx-RetransmissionTimer).

A parameter in the second SL DRX configuration is determined based on a parameter in the first SL DRX configuration. The remote device determines the second SL DRX configuration based on the first SL DRX configuration. The following describes, by using an example, a method for determining the second SL DRX configuration based on the first SL DRX configuration.
(1) A start moment of the second SL DRX on-duration timer is determined based on a second delay. The second delay is a delay from receiving the first message from the relay device by the remote device to sending a response message of the first message to the relay device by the remote device. After receiving the first message, the remote device generates the response message (namely, the second message) of the first message, and sends the second message to the relay device. For example, if a moment at which the first message is received is T1, and a moment at which the second message is sent is T2, the second delay is T2-T1.

A difference between the start moment of the second SL DRX on-duration timer and a start moment of a first SL DRX on-duration timer is less than or equal to the second delay. The start moment of the first SL DRX on-duration timer is indicated by the first SL DRX configuration.

Optionally, the start moment of the second SL DRX on-duration timer is the same as the start moment of the first SL DRX on-duration timer. The remote device sends the second message at a start moment at which the remote device attempts to receive the first message. Alternatively, the relay device attempts to receive the second message at a start moment at which the relay device sends the first message.

If the relay device determines the second SL DRX configuration, the remote device may send the second delay to the relay device, and the relay device determines the second SLDRX configuration based on the second delay. Specifically, the relay device determines the start moment of the second SL DRX on-duration timer based on the second delay. For a method, refer to the foregoing process in which the remote device determines the second SL DRX configuration based on the second delay.

(2) The second SL DRX cycle is determined based on a first SL DRX cycle in the first SL DRX configuration.

For example, the second SL DRX cycle is the same as the first SL DRX cycle. For another example, the first SL DRX cycle is an integer multiple of the second SL DRX cycle.

(3) The second SL DRX configuration further includes duration of the second SL DRX on-duration timer, and the duration of the second SL DRX on-duration timer is determined based on duration of the first SL DRX on-duration timer in the first SL DRX configuration. For example, the duration of the second SL DRX on-duration timer is the same as the duration of the first SL DRX on-duration timer. The duration of the second SL DRX on-duration timer may alternatively be greater than the duration of the first SL DRX on-duration timer in the first SL DRX configuration.

After receiving the second SL DRX configuration, the relay device receives the second message based on the second SL DRX configuration.

It may be understood that embodiments provided in this application may separately form solutions that need to be protected in this application, or may be combined with each other to form a solution that needs to be protected in this application. For example, the embodiment in FIG. 10 may be combined with any one of the foregoing embodiments in FIG. 3 to FIG. 9. On the basis of the foregoing embodiments in FIG. 3 to FIG. 9, the embodiment in FIG. 10 may be further included.

In a possible design, based on a same technical concept as the embodiment in FIG. 10, the relay device may alternatively receive the second message based on a predefined SL DRX configuration. The predefined SL DRX configuration may also be referred to as a dedicated SL DRX configuration. Based on the embodiments in FIG. 3 to FIG. 9, the remote device sends the second message to the relay device based on the predefined SL DRX configuration, and the relay device receives the second message based on the predefined SL DRX configuration.

It may be understood that, to implement functions in the foregoing embodiments, the relay device, the remote device, the first network device, and the second network device include corresponding hardware structures and/or software modules for performing the functions. Persons skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraints of the technical solutions.

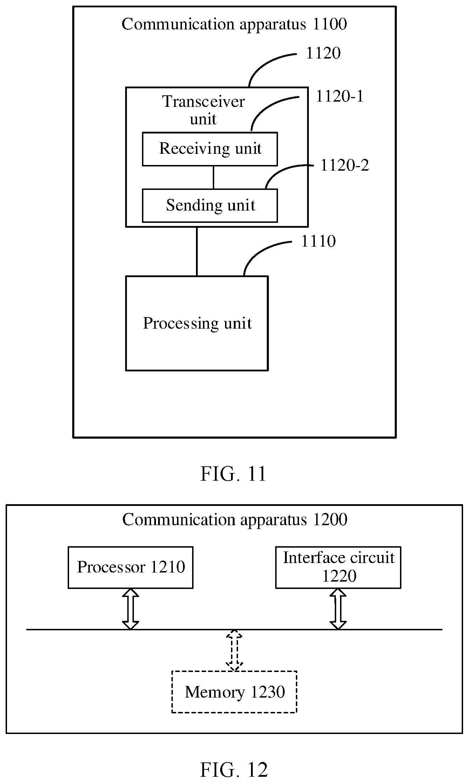

FIG. 11 and FIG. 12 each are a schematic diagram of a possible structure of a communication apparatus according to an embodiment of this application. These communication apparatuses may be configured to implement functions of the relay device, the remote device, the first network device, or the second network device in the foregoing method embodiments, and therefore can also implement beneficial effects of the foregoing method embodiments. In this embodiment of this application, the communication apparatus may be the remote device 101 shown in FIG. 1, may be the relay device 102 shown in FIG. 1, may be the first network device 103 shown in FIG. 1, or may be a module (for example, a chip) used in the relay terminal, the remote device, or the first network device.

As shown in FIG. 11, a communication apparatus 1100 includes a processing unit 1110 and a transceiver unit 1120. The processing unit 1110 is configured to invoke the transceiver unit 1120 to perform a receiving or sending operation. The transceiver unit 1120 may further include a receiving unit 1120-1 and a sending unit 1120-2. The communication apparatus 1100 is configured to implement a function of the relay device, the remote device, the first network device, or the second network device in the foregoing method embodiments.

In an embodiment, when the communication apparatus 1100 is configured to implement a function of the relay device in the method embodiments: The receiving unit 1120-1 is configured to receive first information from a remote device, where the first information includes a paging parameter of the remote device. The sending unit 1120-2 is configured to send second information to a first network device, where the second information includes the paging parameter.

Optionally, an SL communication configuration includes a first SL DRX configuration. The receiving unit 1120-1 is further configured to receive the first SL DRX configuration from the first network device, and the first SL DRX configuration is used by the relay device to send a first message to the remote device.

Optionally, the sending unit 1120-2 is further configured to send the first SL DRX configuration to the remote device.

Optionally, the first SL DRX configuration is determined based on the second information.

Optionally, the paging parameter includes an identifier of the remote device.

Optionally, the paging parameter may further include cycle information, and the cycle information is a parameter for determining the first SL DRX configuration.

Optionally, the second information further includes delay information, and the delay information indicates a delay of forwarding a message from the first network device by the relay device to the remote device.

Optionally, the second information further includes a time interval between a system frame number and a direct frame number.

Optionally, the first SL DRX configuration further includes a first SL DRX cycle, the first SL DRX cycle is a cycle in which the relay device sends the first message to the remote device, the first SL DRX cycle is the same as a paging cycle of the remote device, and the paging cycle of the remote device is a cycle in which the first network device pages the remote device.

Optionally, the first SL DRX configuration further includes duration of a first SL DRX on-duration timer, and the duration of the first SL DRX on-duration timer is greater than or equal to duration of a PO of the remote device.

Optionally, the receiving unit 1120-1 is further configured to receive a second SL DRX configuration from the remote device, where the second SL DRX configuration is determined based on the first SL DRX configuration, and the second SL DRX configuration is used by the relay device to receive a second message from the remote device.

In a possible design, the second SL DRX configuration indicates a start moment of a second SL DRX on-duration timer, the start moment of the second SL DRX on-duration timer is determined based on a second delay, and the second delay is a delay from receiving the first message from the relay device by the remote device to sending a response message of the first message to the relay device by the remote device.

Optionally, a difference between the start moment of the second SL DRX on-duration timer and a start moment of the first SL DRX on-duration timer is less than or equal to the second delay.

Optionally, the second SL DRX configuration further includes a second SL DRX cycle, and the second SL DRX cycle is determined based on the first SL DRX cycle in the first SL DRX configuration.

Optionally, the second SL DRX configuration further includes duration of the second SL DRX on-duration timer, and the duration of the second SL DRX on-duration timer is determined based on the duration of the first SL DRX on-duration timer in the first SL DRX configuration.

When the communication apparatus 1100 is configured to implement a function of the first network device in the method embodiments: The transceiver unit 1120 is configured to receive second information from a relay device, where the second information includes a paging parameter of a remote device. The processing unit 1110 is configured to perform SL communication configuration based on the second information.

In a possible design, the paging parameter includes an identifier of the remote device. In this way, the first network device can determine the SL communication configuration based on the identifier of the remote device.

The processing unit 1110 may perform any one or more of the following possible configurations based on the second information.

In a first possible design, the SL communication configuration includes an SL configured grant (SL configured grant) of the relay device, the SL configured grant is for configuring an SL transmission resource for the relay device, and the SL transmission resource is used by the relay device to send a message to the remote device.

In a second possible design, the processing unit 1110 may perform DRX configuration of the relay device based on the second information. The DRX configuration of the relay device is used by the relay device to receive a network-side message through an air interface.

In a third possible design, the SL communication configuration may include a first SL discontinuous reception DRX configuration, where the first SL DRX configuration is for transmitting a first message, and the first message is a message sent by the relay device to the remote device.

Optionally, the transceiver unit 1120 is further configured to send the first SL DRX configuration to the relay device.

Optionally, the first SL DRX configuration is determined based on the second information.

Optionally, the first message is for paging the remote device.

Optionally, the second information further includes delay information, and the delay information indicates a first delay of forwarding a message from the first network device by the relay device to the remote device.

Optionally, the first SL DRX configuration indicates a start moment of a first SL DRX on-duration timer, and a difference between the start moment of the first SL DRX on-duration timer and a start moment of a paging occasion PO of the remote device is less than or equal to the first delay.

Optionally, the second information further includes a time interval between a system frame number SFN and a direct frame number DFN.

Optionally, the first SL DRX configuration further includes a first SL DRX cycle, and the first SL DRX cycle is the same as a paging cycle of the remote device.

Optionally, the first SL DRX configuration further includes duration of the first SL DRX on-duration timer, and the duration of the first SL DRX on-duration timer is greater than or equal to duration of the PO of the remote device.

In a possible design, the processing unit 1110 may obtain the first SL DRX configuration in the following several manners.

In a first possible manner, the paging parameter further includes cycle information, and the first network device determines the first SL DRX configuration based on the second information.

In a second possible manner, the transceiver unit 1120 is further configured to: send first request information to a second network device, where the first request information is for requesting cycle information; and receive the cycle information from the second network device, where the second network device is a core network device of the remote device or an anchor gNB of the remote device. The first network device determines the first SL DRX configuration based on the second information and the cycle information.

In the first or the second possible manner, the processing unit 1110 determines the first SL DRX configuration. Further, when determining the first SL DRX configuration, the processing unit 1110 may determine the first SL DRX configuration based on third information, where the third information includes PCCH-config.

In a third possible manner, the transceiver unit 1120 is further configured to send second request information to a second network device, where the second network device is a core network device of the remote device or an anchor gNB of the remote device, and the second request information is for requesting to configure an SL DRX configuration for the remote device. The first network device receives the first SL DRX configuration from the second network device.

Based on the third possible manner, the second request information may carry the second information and/or third information, where the third information includes a paging control channel configuration.

When the communication apparatus 1100 is configured to implement a function of the remote device in the method embodiments: The sending unit 1120-2 is configured to send first information to a relay device, where the first information includes a paging parameter of the remote device. The receiving unit 1120-1 is configured to receive a first sidelink SL discontinuous reception DRX configuration from the relay device, where the first SL DRX configuration is determined based on second information, the second information includes the paging parameter, and the first SL DRX configuration is used by the remote device to receive a first message from the relay device.

Optionally, the paging parameter includes an identifier of the remote device.

Optionally, the paging parameter further includes cycle information.

Optionally, the first message is for paging the remote device.

Optionally, the second information further includes delay information, and the delay information indicates a first delay of forwarding a message from the first network device by the relay device to the remote device.

Optionally, the second information further includes a time interval between a system frame number SFN and a direct frame number DFN.

Optionally, the first SL DRX configuration indicates a start moment of a first SL DRX on-duration timer, and a difference between the start moment of the first SL DRX on-duration timer and a start moment of a paging occasion PO of the remote device is less than or equal to the first delay.

Optionally, the first SL DRX configuration further includes a first SL DRX cycle, and the first SL DRX cycle is the same as a paging cycle of the remote device.

Optionally, the first SL DRX configuration further includes duration of the first SL DRX on-duration timer, and the duration of the first SL DRX on-duration timer is greater than or equal to duration of the PO of the remote device.

Optionally, the sending unit 1120-2 is further configured to send a second SL DRX configuration to the relay device, where the second SL DRX configuration is determined based on the first SL DRX configuration, and the second SL DRX configuration is used by the remote device to send a second message to the relay device.

Optionally, the second SL DRX configuration indicates a start moment of a second SL DRX on-duration timer, the start moment of the second SL DRX on-duration timer is determined based on a second delay, and the second delay is a delay from receiving the first message from the relay device by the remote device to sending a response message of the first message to the relay device by the remote device.

Optionally, the second SL DRX configuration further includes a second SL DRX cycle, and the second SL DRX cycle is determined based on the first SL DRX cycle in the first SL DRX configuration.

Optionally, the second SL DRX configuration further includes duration of the second SL DRX on-duration timer, and the duration of the second SL DRX on-duration timer is determined based on the duration of the first SL DRX on-duration timer in the first SL DRX configuration. For example, the duration of the second SL DRX on-duration timer is the same as the duration of the first SL DRX on-duration timer. The duration of the second SL DRX on-duration timer may alternatively be greater than the duration of the first SL DRX on-duration timer in the first SL DRX configuration.

When the communication apparatus 1100 is configured to implement a function of the second network device in the method embodiments: The receiving unit 1120-1 is configured to receive first request information from a first network device, where the first request information is for requesting cycle information. The sending unit 1120-2 is configured to send the cycle information to the first network device. The cycle information is for determining a first SL DRX configuration. Alternatively, the receiving unit 1120-1 is configured to receive second request information from a first network device, where the second request information is for requesting to configure an SL DRX configuration for a remote device. The sending unit 1120-2 is configured to send a first SL DRX configuration to the first network device.

Optionally, the first request information carries an identifier of the remote device.

In another embodiment, when the communication apparatus 1100 is configured to implement a function of the relay device in the method embodiments: The receiving unit 1120-1 is configured to receive first information from a remote device, where the first information includes a paging parameter of the remote device. The processing unit 1110 is configured to determine a first sidelink SL discontinuous reception DRX configuration based on the first information, where the first SL DRX configuration is used by the remote device to receive a first message from the relay device.

Optionally, when determining the first SL DRX configuration based on the first information, the processing unit 1110 is specifically configured to determine the first SL DRX configuration based on the first information and third information. The third information includes a paging control channel configuration.

Optionally, the receiving unit 1120-1 is further configured to receive the third information from a first network device, where the third information includes the paging control channel configuration. For example, the paging control channel configuration may include SI or a SIB1.

Optionally, the first message is for paging the remote device, and the first message may be system information, or the first message may be other information or data sent by the relay device to the remote device.

Optionally, the paging parameter includes an identifier of the remote device.

On a basis that the paging parameter includes the identifier of the remote device, optionally, the paging parameter may further include cycle information, and the cycle information is a parameter for determining the first SL DRX configuration.

Optionally, the first SL DRX configuration further includes a first SL DRX cycle, the first SL DRX cycle is a cycle in which the relay device sends the first message to the remote device, the first SL DRX cycle is the same as a paging cycle of the remote device, and the paging cycle of the remote device is a cycle in which the first network device pages the remote device.

Optionally, the first SL DRX configuration further includes duration of a first SL DRX on-duration timer, and the duration of the first SL DRX on-duration timer is greater than or equal to duration of a PO of the remote device.

Optionally, the receiving unit 1120-1 is further configured to receive a second SL DRX configuration from the remote device, where the second SL DRX configuration is determined based on the first SL DRX configuration, and the second SL DRX configuration is used by the relay device to receive a second message from the remote device.

Optionally, the second SL DRX configuration indicates a start moment of a second SL DRX on-duration timer, the start moment of the second SL DRX on-duration timer is determined based on a second delay, and the second delay is a delay from receiving the first message from the relay device by the remote device to sending a response message of the first message to the relay device by the remote device.

Optionally, a difference between the start moment of the second SL DRX on-duration timer and a start moment of the first SL DRX on-duration timer is less than or equal to the second delay. The start moment of the first SL DRX on-duration timer is indicated by the first SL DRX configuration.

Optionally, the second SL DRX configuration further includes a second SL DRX cycle, and the second SL DRX cycle is determined based on the first SL DRX cycle in the first SL DRX configuration.

Optionally, the second SL DRX configuration further includes duration of the second SL DRX on-duration timer, and the duration of the second SL DRX on-duration timer is determined based on the duration of the first SL DRX on-duration timer in the first SL DRX configuration.

When the communication apparatus 1100 is configured to implement a function of the remote device in the method embodiments: The transceiver unit 1120 is configured to receive fourth information from a relay device, where the fourth information includes DRX assistance information of the remote device. The processing unit 1110 is configured to determine a first SL DRX configuration based on the fourth information, where the first SL DRX configuration is used by the remote device to receive a first message from the relay device.

Optionally, the DRX assistance information includes delay information, and the delay information indicates a delay of forwarding a message from a first network device by the relay device to the remote device.

Optionally, the DRX assistance information includes a time interval between a system frame number SFN and a direct frame number DFN.

Optionally, the remote device sends the first SL DRX configuration to the relay device.

Optionally, the first message is for paging the remote device, and the first message may be system information, or the first message may be other information or data sent by the relay device to the remote device.

Optionally, the first SL DRX configuration further includes a first SL DRX cycle.

Optionally, the first SL DRX configuration further includes duration of a first SL DRX on-duration timer, and the duration of the first SL DRX on-duration timer is greater than or equal to duration of a PO of the remote device.

Optionally, the transceiver unit 1120 is further configured to receive a second SL DRX configuration from the remote device, where the second SL DRX configuration is determined based on the first SL DRX configuration, and the second SL DRX configuration is used by the relay device to receive a second message from the remote device.

Optionally, the second SL DRX configuration indicates a start moment of a second SL DRX on-duration timer, the start moment of the second SL DRX on-duration timer is determined based on a second delay, and the second delay is a delay from receiving the first message from the relay device by the remote device to sending a response message of the first message to the relay device by the remote device.

Optionally, a difference between the start moment of the second SL DRX on-duration timer and a start moment of the first SL DRX on-duration timer is less than or equal to the second delay. The start moment of the first SL DRX on-duration timer is indicated by the first SL DRX configuration.

Optionally, the second SL DRX configuration further includes a second SL DRX cycle, and the second SL DRX cycle is determined based on the first SL DRX cycle in the first SL DRX configuration.

Optionally, the second SL DRX configuration further includes duration of the second SL DRX on-duration timer, and the duration of the second SL DRX on-duration timer is determined based on the duration of the first SL DRX on-duration timer in the first SL DRX configuration.

In another embodiment, when the communication apparatus 1100 is configured to implement a function of the relay device in the method embodiments: The sending unit 1120-2 is configured to send fourth information to a remote device, where the fourth information includes DRX assistance information of the remote device. The processing unit 1110 is configured to determine a first SL DRX configuration based on the fourth information. Alternatively, the receiving unit 1120-1 is configured to receive a first SL DRX configuration from a remote device. The first SL DRX configuration is determined based on the fourth information, and the first SL DRX configuration is used by the remote device to receive a first message from the relay device.

Optionally, the DRX assistance information includes delay information, and the delay information indicates a delay of forwarding a message from a first network device by the relay device to the remote device.

Optionally, the DRX assistance information includes a time interval between a system frame number SFN and a direct frame number DFN.

Optionally, the sending unit 1120-2 is further configured to send the first SL DRX configuration to the relay device.

Optionally, the first message is for paging the remote device, and the first message may be system information, or the first message may be other information or data sent by the relay device to the remote device.

Optionally, the first SL DRX configuration further includes a first SL DRX cycle.

Optionally, the first SL DRX configuration further includes duration of a first SL DRX on-duration timer, and the duration of the first SL DRX on-duration timer is greater than or equal to duration of a PO of the remote device.

Optionally, the transceiver unit 1120 is further configured to receive a second SL DRX configuration from the remote device, where the second SL DRX configuration is determined based on the first SL DRX configuration, and the second SL DRX configuration is used by the relay device to receive a second message from the remote device.

Optionally, the second SL DRX configuration indicates a start moment of a second SL DRX on-duration timer, the start moment of the second SL DRX on-duration timer is determined based on a second delay, and the second delay is a delay from receiving the first message from the relay device by the remote device to sending a response message of the first message to the relay device by the remote device.

Optionally, a difference between the start moment of the second SL DRX on-duration timer and a start moment of the first SL DRX on-duration timer is less than or equal to the second delay. The start moment of the first SL DRX on-duration timer is indicated by the first SL DRX configuration.

Optionally, the second SL DRX configuration further includes a second SL DRX cycle, and the second SL DRX cycle is determined based on the first SL DRX cycle in the first SL DRX configuration.

Optionally, the second SL DRX configuration further includes duration of the second SL DRX on-duration timer, and the duration of the second SL DRX on-duration timer is determined based on the duration of the first SL DRX on-duration timer in the first SL DRX configuration.

For more detailed descriptions of the processing unit 1110, the transceiver unit 1120, the receiving unit 1120-1, and the sending unit 1120-2, directly refer to related descriptions in the method embodiments. Details are not described herein again.

As shown in FIG. 12, a communication apparatus 1200 includes a processor 1210 and an interface circuit 1220. The processor 1210 and the interface circuit 1220 are coupled to each other. It may be understood that the interface circuit 1220 may be a transceiver or an input/output interface. Optionally, the communication apparatus 1200 may further include a memory 1230, configured to: store instructions executed by the processor 1210, or store input data required by the processor 1210 to run the instructions, or store data generated after the processor 1210 runs the instructions.

When the communication apparatus 1200 is configured to implement the sidelink communication method provided in the foregoing method embodiment, the processor 1210 is configured to implement a function of the processing unit 1110, and the interface circuit 1220 is configured to implement a function of the transceiver unit 1120.

Both the relay device and the remote device may be terminal devices. When the communication apparatus is a chip used in the terminal device, the chip in the terminal device implements the functions of the terminal device in the foregoing method embodiments. The chip of the terminal device receives information from another module (for example, a radio frequency module or an antenna) in the terminal device, where the information is sent by a network device to the terminal device; or the chip of the terminal device sends information to another module (for example, a radio frequency module or an antenna) in the terminal device, where the information is sent by the terminal device to a network device.

The first network device and the second network device may be collectively referred to as a network device. When the communication apparatus is a module used in a network device, the module in the network device implements the functions of the network device in the foregoing method embodiments. The module in the network device receives information from another module (for example, a radio frequency module or an antenna) in the network device, where the information is sent by a terminal to the network device. Alternatively, the module in the network device sends information to another module (for example, a radio frequency module or an antenna) in the network device, where the information is sent by the network device to a terminal. The module in the network device herein may be a baseband chip of the network device, or may be a DU or another module. The DU herein may be a DU in an open radio access network (open radio access network, O-RAN) architecture.

It may be understood that, the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor or the like.

In embodiments of this application, the memory may be a non-volatile memory, a hard disk drive (hard disk drive, HDD) or a solid-state drive (solid-state drive, SSD), or may be a volatile memory (volatile memory), for example, a random access memory (random-access memory, RAM). The memory is any other medium that can carry or store expected program code in a form of an instruction or a data structure and that can be accessed by a computer, but is not limited thereto. The memory in embodiments of this application may alternatively be a circuit or any other apparatus that can implement a storage function, and is configured to store the program instructions and/or the data.

Some or all of operations and functions performed by the relay device, the remote device, the first network device, and the second network device described in the foregoing method embodiments of this application may be implemented by using a chip or an integrated circuit.

An embodiment of this application further provides a chip, including a processor, configured to support a communication apparatus in implementing functions of the devices in the foregoing method embodiments. In a possible design, the chip is connected to a memory or the chip includes the memory, and the memory is configured to store program instructions and data that are necessary for the communication apparatus.

An embodiment of this application provides a computer-readable storage medium storing a computer program. The computer program includes instructions for performing the foregoing method embodiments.

An embodiment of this application provides a computer program product including instructions. When the computer program product runs on a computer, the foregoing method embodiments are implemented.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, at least one means one or more, and a plurality of means two or more. "And/or" describes an association relationship between associated objects and indicates that three relationships may exist. For example, A and/or B may indicate the following three cases: Only A exists, both A and B exist, and only B exists, where A and B may be singular or plural.

It may be understood that various numbers in embodiments of this application are merely used for differentiation for ease of description, and are not used to limit the scope of embodiments of this application. The sequence numbers of the foregoing processes do not mean execution sequences, and the execution sequences of the processes should be determined based on functions and internal logic of the processes.

Persons skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a magnetic disk memory, a compact disc read-only memory (compact disc read-only memory, CD-ROM), an optical memory, and the like) that include computer-usable program code.

This application is described with reference to the flowcharts and/or block diagrams of the method, the device (system), and the computer program product according to embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

Although preferred embodiments of this application are described, persons skilled in the art can make changes and modifications to these embodiments after they learn of a basic inventive concept. Therefore, the following claims are intended to be construed as to cover the preferred embodiments and all changes and modifications falling within the scope of this application.

The foregoing descriptions are merely specific implementations of this application, but are not intended to limit the protection scope of this application. Any variation or replacement readily figured out by persons skilled in the art within the technical scope disclosed in this application shall fall within the protection scope of this application. Therefore, the protection scope of this application shall be subject to the protection scope of the claims.

## Claims

1. A sidelink communication method, comprising:
receiving, by a relay device, first information from a remote device, wherein the first information comprises a first paging parameter of the remote device; and
sending, by the relay device, second information to a first network device, wherein the second information comprises the first paging parameter, wherein
the relay device communicates and interacts with the remote device by using a sidelink, and the remote device communicates and interacts with the first network device by using the relay device.

2. The method according to claim 1, wherein the first paging parameter comprises a first identifier of the remote device.

3. The method according to claim 1 or 2, wherein the first paging parameter further comprises cycle information.

4. The method according to any one of claims 1 to 3, wherein the method further comprises:
receiving, by the relay device, a first sidelink SL discontinuous reception DRX configuration from the first network device, wherein the first SL DRX configuration is used by the relay device to send a first message to the remote device, and the first message is for paging the remote device; and
sending, by the relay device, the first SL DRX configuration to the remote device.

5. The method according to claim 4, wherein the first SL DRX configuration is determined based on the second information.

6. The method according to claim 4 or 5, wherein the second information further comprises delay information, and the delay information indicates a first delay of forwarding a message from the first network device by the relay device to the remote device.

7. The method according to any one of claims 4 to 6, wherein the second information further comprises a time interval between a system frame number SFN and a direct frame number DFN.

8. The method according to claim 6, wherein the first SL DRX configuration comprises information indicating a start moment of a first SL DRX on-duration timer, and a difference between the start moment of the first SL DRX on-duration timer and a start moment of a paging occasion PO of the remote device is less than or equal to the first delay.

9. The method according to any one of claims 4 to 8, wherein the first SL DRX configuration further comprises a first SL DRX cycle, the first SL DRX cycle is a cycle in which the relay device sends the first message to the remote device, the first SL DRX cycle is the same as a paging cycle of the remote device, and the paging cycle of the remote device is a cycle in which the first network device pages the remote device.

10. The method according to any one of claims 4 to 9, wherein the first SL DRX configuration further comprises duration of the first SL DRX on-duration timer, and the duration of the first SL DRX on-duration timer is greater than or equal to duration of the PO of the remote device.

11. The method according to any one of claims 4 to 10, wherein the method further comprises:
receiving, by the relay device, a second SL DRX configuration from the remote device, wherein the second SL DRX configuration is determined based on the first SL DRX configuration, and the second SL DRX configuration is used by the relay device to receive a second message from the remote device; and
receiving, by the relay device, the second message after sending the first message to the remote device.

12. The method according to claim 11, wherein the second SL DRX configuration indicates a start moment of a second SL DRX on-duration timer, the start moment of the second SL DRX on-duration timer is determined based on a second delay, and the second delay is a delay from receiving the first message from the relay device by the remote device to sending the second message to the relay device by the remote device.

13. The method according to claim 12, wherein a difference between the start moment of the second SL DRX on-duration timer and the start moment of the first SL DRX on-duration timer is less than or equal to the second delay.

14. The method according to any one of claims 11 to 13, wherein the second SL DRX configuration further comprises a second SL DRX cycle, and the second SL DRX cycle is determined based on the first SL DRX cycle in the first SL DRX configuration.

15. The method according to any one of claims 11 to 14, wherein the second SL DRX configuration further comprises duration of the second SL DRX on-duration timer, and the duration of the second SL DRX on-duration timer is determined based on the duration of the first SL DRX on-duration timer in the first SL DRX configuration.

16. The method according to any one of claims 1 to 15, wherein the second information further comprises a second identifier of the remote device.

17. A sidelink discontinuous reception-based communication method, comprising:
receiving, by a first network device, second information from a relay device, wherein the second information comprises a first paging parameter of a remote device; and
performing, by the first network device, sidelink SL configuration based on the second information, wherein
the relay device communicates and interacts with the remote device by using an SL, and the remote device communicates and interacts with the first network device by using the relay device.

18. The method according to claim 17, wherein the first paging parameter comprises a first identifier of the remote device.

19. The method according to claim 17 or 18, wherein the method further comprises: sending, by the first network device, a first SL discontinuous reception DRX configuration to the relay device, wherein the first SL DRX configuration is for transmitting a first message, the first message is a message sent by the relay device to the remote device, and the first message is for paging the remote device.

20. The method according to claim 19, wherein the first SL DRX configuration is determined based on the second information.

21. The method according to claim 19 or 20, wherein the second information further comprises delay information, and the delay information indicates a first delay of forwarding a message from the first network device by the relay device to the remote device.

22. The method according to any one of claims 19 to 21, wherein the first SL DRX configuration comprises information indicating a start moment of a first SL DRX on-duration timer, and a difference between the start moment of the first SL DRX on-duration timer and a start moment of a paging occasion PO of the remote device is less than or equal to the first delay.

23. The method according to any one of claims 19 to 22, wherein the second information further comprises a time interval between a system frame number SFN and a direct frame number DFN.

24. The method according to any one of claims 19 to 23, wherein the first SL DRX configuration further comprises a first SL DRX cycle, and the first SL DRX cycle is the same as a paging cycle of the remote device.

25. The method according to any one of claims 19 to 24, wherein the first SL DRX configuration further comprises duration of the first SL DRX on-duration timer, and the duration of the first SL DRX on-duration timer is greater than or equal to duration of the PO of the remote device.

26. The method according to any one of claims 19 to 25, wherein the first paging parameter further comprises cycle information; and
the performing, by the first network device, sidelink SL configuration based on the second information comprises: determining, by the first network device, the first SL DRX configuration based on the second information.

27. A sidelink communication method, comprising:
sending, by a remote device, first information to a relay device, wherein the first information comprises a first paging parameter of the remote device; and
receiving, by the remote device, a first sidelink SL discontinuous reception DRX configuration from the relay device, wherein the first SL DRX configuration is determined based on second information, the second information comprises the first paging parameter, and the first SL DRX configuration is used by the remote device to receive a first message from the relay device, wherein
the remote device communicates and interacts with the relay device by using an SL, and the remote device communicates and interacts with a first network device by using the relay device.

28. The method according to claim 27, wherein the first paging parameter comprises a first identifier of the remote device.

29. The method according to claim 27 or 28, wherein the first paging parameter further comprises cycle information.

30. The method according to any one of claims 27 to 29, wherein the first message is for paging the remote device.

31. The method according to any one of claims 27 to 30, wherein the first SL DRX configuration further comprises a first SL DRX cycle, and the first SL DRX cycle is the same as a paging cycle of the remote device.

32. The method according to any one of claims 27 to 31, wherein the first SL DRX configuration further comprises duration of a first SL DRX on-duration timer, and the duration of the first SL DRX on-duration timer is greater than or equal to duration of a PO of the remote device.

33. The method according to any one of claims 27 to 32, wherein the method further comprises:
sending, by the remote device, a second SL DRX configuration to the relay device, wherein the second SL DRX configuration is determined based on the first SL DRX configuration, and the second SL DRX configuration is used by the remote device to send a second message to the relay device.

34. The method according to claim 33, wherein the second SL DRX configuration comprises information indicating a start moment of a second SL DRX on-duration timer, the start moment of the second SLDRX on-duration timer is determined based on a second delay, and the second delay is a delay from receiving the first message from the relay device by the remote device to sending a response message of the first message to the relay device by the remote device.

35. The method according to claim 34, wherein a difference between the start moment of the second SL DRX on-duration timer and a start moment of the first SL DRX on-duration timer is less than or equal to the second delay.

36. The method according to claim 34, wherein the second SL DRX configuration further comprises a second SL DRX cycle, and the second SL DRX cycle is determined based on the first SL DRX cycle in the first SL DRX configuration.

37. The method according to claim 34 or 35, wherein the second SL DRX configuration further comprises duration of the second SLDRX on-duration timer, and the duration of the second SL DRX on-duration timer is determined based on the duration of the first SL DRX on-duration timer in the first SL DRX configuration.

38. The method according to any one of claims 27 to 37, wherein the second information further comprises a second identifier of the remote device.

39. A sidelink communication method, comprising:
receiving, by a second network device, first request information from a first network device, wherein the first request information is for requesting cycle information; and
sending, by the second network device, the cycle information to the first network device, wherein the cycle information is for determining a first sidelink SL discontinuous reception DRX configuration, the first SL DRX configuration is used by a relay device to send a first message to a remote device, and the first message is for paging the remote device.

40. The method according to claim 39, wherein the first request information comprises a first identifier of the remote device.

41. A sidelink communication method, comprising:
receiving, by a second network device, second request information from a first network device, wherein the second request information is for requesting to configure a sidelink SL discontinuous reception DRX configuration for a remote device; and
sending, by the second network device, a first SL DRX configuration to the first network device, wherein the first SL DRX configuration is used by a relay device to send a first message to the remote device, and the first message is for paging the remote device.

42. The method according to claim 41, wherein the second request message comprises second information and/or third information, the second information comprises a first paging parameter, and the third information comprises a paging control channel configuration.

43. The method according to claim 42, wherein the first paging parameter comprises a first identifier of the remote device.

44. A sidelink communication method, comprising:
receiving, by a relay device, first information from a remote device, wherein the first information comprises a first paging parameter of the remote device; and
determining, by the relay device, a first sidelink SL discontinuous reception DRX configuration based on the first information, wherein the first SL DRX configuration is used by the remote device to receive a first message from the relay device.

45. The method according to claim 44, wherein the determining, by the relay device, a first SL DRX configuration based on the first information comprises:
determining, by the relay device, the first SL DRX configuration based on the first information and third information, wherein the third information comprises a paging control channel configuration.

46. The method according to claim 45, wherein the method further comprises:
receiving, by the relay device, the third information from a first network device, wherein the third information comprises the paging control channel configuration.

47. The method according to any one of claims 44 to 46, wherein the first message is for paging the remote device.

48. The method according to any one of claims 44 to 47, wherein the first paging parameter comprises a first identifier of the remote device.

49. The method according to claim 48, wherein the first paging parameter further comprises cycle information.

50. The method according to any one of claims 44 to 49, wherein the first SL DRX configuration comprises a first SL DRX cycle, the first SL DRX cycle is a cycle in which the relay device sends the first message to the remote device, the first SL DRX cycle is the same as a paging cycle of the remote device, and the paging cycle of the remote device is a cycle in which the first network device pages the remote device.

51. The method according to any one of claims 44 to 50, wherein the first SL DRX configuration comprises duration of a first SL DRX on-duration timer, and the duration of the first SL DRX on-duration timer is greater than or equal to duration of a PO of the remote device.

52. The method according to any one of claims 44 to 51, wherein the method further comprises:
receiving, by the relay device, a second SL DRX configuration from the remote device, wherein the second SL DRX configuration is determined based on the first SL DRX configuration, and the second SL DRX configuration is used by the relay device to receive a second message from the remote device; and
receiving, by the relay device, the second message after sending the first message to the remote device.

53. The method according to claim 52, wherein the second SL DRX configuration indicates a start moment of a second SL DRX on-duration timer, the start moment of the second SL DRX on-duration timer is determined based on a second delay, and the second delay is a delay from receiving the first message from the relay device by the remote device to sending the second message to the relay device by the remote device.

54. The method according to claim 53, wherein a difference between the start moment of the second SL DRX on-duration timer and a start moment of the first SL DRX on-duration timer is less than or equal to the second delay.

55. The method according to any one of claims 52 to 54, wherein the second SL DRX configuration further comprises a second SL DRX cycle, and the second SL DRX cycle is determined based on the first SL DRX cycle in the first SL DRX configuration.

56. The method according to any one of claims 52 to 55, wherein the second SL DRX configuration further comprises duration of the second SL DRX on-duration timer, and the duration of the second SL DRX on-duration timer is determined based on the duration of the first SL DRX on-duration timer in the first SL DRX configuration.

57. A sidelink communication method, comprising:
receiving, by a remote device, fourth information from a relay device, wherein the fourth information comprises discontinuous reception DRX assistance information of the remote device; and
determining, by the remote device, a first sidelink SL DRX configuration based on the fourth information, wherein the first SL DRX configuration is used by the remote device to receive a first message from the relay device.

58. The method according to claim 57, wherein the DRX assistance information comprises delay information, and the delay information indicates a delay of forwarding a message from a first network device by the relay device to the remote device.

59. The method according to claim 57 or 58, wherein the DRX assistance information comprises a time interval between a system frame number SFN and a direct frame number DFN.

60. The method according to any one of claims 57 to 59, wherein the method further comprises:
sending, by the remote device, the first SL DRX configuration to the relay device.

61. The method according to any one of claims 57 to 60, wherein the first message is for paging the remote device.

62. The method according to any one of claims 57 to 61, wherein the first SL DRX configuration comprises a first SL DRX cycle, the first SL DRX cycle is a cycle in which the relay device sends the first message to the remote device, the first SL DRX cycle is the same as a paging cycle of the remote device, and the paging cycle of the remote device is a cycle in which the first network device pages the remote device.

63. The method according to any one of claims 57 to 62, wherein the method further comprises:
sending, by the remote device, a second SL DRX configuration to the relay device, wherein the second SL DRX configuration is determined based on the first SL DRX configuration, and the second SL DRX configuration is used by the relay device to receive a second message from the remote device; and
receiving, by the remote device, the second message from the relay device after receiving the first message.

64. The method according to claim 63, wherein the second SL DRX configuration indicates a start moment of a second SL DRX on-duration timer, the start moment of the second SL DRX on-duration timer is determined based on a second delay, and the second delay is a delay from receiving the first message from the relay device by the remote device to sending the second message to the relay device by the remote device.

65. The method according to claim 64, wherein a difference between the start moment of the second SL DRX on-duration timer and a start moment of a first SL DRX on-duration timer is less than or equal to the second delay.

66. The method according to any one of claims 63 to 65, wherein the second SL DRX configuration further comprises a second SL DRX cycle, and the second SL DRX cycle is determined based on the first SL DRX cycle in the first SL DRX configuration.

67. The method according to any one of claims 63 to 66, wherein the second SL DRX configuration further comprises duration of the second SL DRX on-duration timer, and the duration of the second SL DRX on-duration timer is determined based on duration of the first SL DRX on-duration timer in the first SL DRX configuration.

68. A sidelink communication method, comprising:
sending, by a relay device, fourth information to a remote device, wherein the fourth information comprises discontinuous reception DRX assistance information of the remote device; and
determining, by the relay device, a first sidelink SL DRX configuration based on the fourth information; or
receiving, by the relay device, a first SL DRX configuration from the remote device, wherein
the first SL DRX configuration is determined based on the fourth information, and the first SL DRX configuration is used by the remote device to receive a first message from the relay device.

69. The method according to claim 68, wherein the DRX assistance information comprises delay information, and the delay information indicates a delay of forwarding a message from a first network device by the relay device to the remote device.

70. The method according to claim 68 or 69, wherein the DRX assistance information comprises a time interval between a system frame number SFN and a direct frame number DFN.

71. The method according to any one of claims 68 to 70, wherein the method further comprises:
receiving, by the relay device, the first SL DRX configuration from the remote device.

72. The method according to any one of claims 68 to 71, wherein the first message is for paging the remote device.

73. The method according to any one of claims 68 to 72, wherein the first SL DRX configuration comprises a first SL DRX cycle, the first SL DRX cycle is a cycle in which the relay device sends the first message to the remote device, the first SL DRX cycle is the same as a paging cycle of the remote device, and the paging cycle of the remote device is a cycle in which the first network device pages the remote device.

74. The method according to any one of claims 68 to 73, wherein the method further comprises:
receiving, by the relay device, a second SL DRX configuration from the remote device, wherein the second SL DRX configuration is determined based on the first SL DRX configuration, and the second SL DRX configuration is used by the relay device to receive a second message from the remote device; and
receiving, by the relay device, the second message after sending the first message to the remote device.

75. The method according to claim 74, wherein the second SL DRX configuration indicates a start moment of a second SL DRX on-duration timer, the start moment of the second SL DRX on-duration timer is determined based on a second delay, and the second delay is a delay from receiving the first message from the relay device by the remote device to sending the second message to the relay device by the remote device.

76. The method according to claim 75, wherein a difference between the start moment of the second SL DRX on-duration timer and a start moment of a first SL DRX on-duration timer is less than or equal to the second delay.

77. The method according to any one of claims 74 to 76, wherein the second SL DRX configuration further comprises a second SL DRX cycle, and the second SL DRX cycle is determined based on the first SL DRX cycle in the first SL DRX configuration.

78. The method according to any one of claims 74 to 77, wherein the second SL DRX configuration further comprises duration of the second SL DRX on-duration timer, and the duration of the second SL DRX on-duration timer is determined based on duration of the first SL DRX on-duration timer in the first SL DRX configuration.

79. A sidelink communication apparatus, comprising:
a receiving unit, configured to receive first information from a remote device, wherein the first information comprises a first paging parameter of the remote device; and
a sending unit, configured to send second information to a first network device, wherein the second information comprises the first paging parameter, wherein
a relay device communicates and interacts with the remote device by using a sidelink, and the remote device communicates and interacts with the first network device by using the relay device.

80. The apparatus according to claim 79, wherein the first paging parameter comprises a first identifier of the remote device.

81. The apparatus according to claim 79 or 80, wherein the first paging parameter further comprises cycle information.

82. The apparatus according to any one of claims 79 to 81, wherein the receiving unit is further configured to:
receive a first sidelink SL discontinuous reception DRX configuration from the first network device, wherein the first SL DRX configuration is used by the relay device to send a first message to the remote device, and the first message is for paging the remote device; and
the sending unit is further configured to:
send the first SL DRX configuration to the remote device.

83. The apparatus according to claim 82, wherein the first SL DRX configuration is determined based on the second information.

84. The apparatus according to claim 82 or 83, wherein the second information further comprises delay information, and the delay information indicates a first delay of forwarding a message from the first network device by the relay device to the remote device.

85. The apparatus according to any one of claims 82 to 84, wherein the second information further comprises a time interval between a system frame number SFN and a direct frame number DFN.

86. The apparatus according to claim 84, wherein the first SL DRX configuration comprises information indicating a start moment of a first SL DRX on-duration timer, and a difference between the start moment of the first SL DRX on-duration timer and a start moment of a paging occasion PO of the remote device is less than or equal to the first delay.

87. The apparatus according to any one of claims 82 to 86, wherein the first SL DRX configuration further comprises a first SL DRX cycle, the first SL DRX cycle is a cycle in which the relay device sends the first message to the remote device, the first SL DRX cycle is the same as a paging cycle of the remote device, and the paging cycle of the remote device is a cycle in which the first network device pages the remote device.

88. The apparatus according to any one of claims 82 to 87, wherein the first SL DRX configuration further comprises duration of the first SL DRX on-duration timer, and the duration of the first SL DRX on-duration timer is greater than or equal to duration of the PO of the remote device.

89. The apparatus according to any one of claims 82 to 88, wherein the receiving unit is further configured to:
receive a second SLDRX configuration from the remote device, wherein the second SL DRX configuration is determined based on the first SL DRX configuration, and the second SL DRX configuration is used by the relay device to receive a second message from the remote device; and
the sending unit is further configured to:
receive the second message after sending the first message to the remote device.

90. The apparatus according to claim 89, wherein the second SL DRX configuration indicates a start moment of a second SL DRX on-duration timer, the start moment of the second SL DRX on-duration timer is determined based on a second delay, and the second delay is a delay from receiving the first message from the relay device by the remote device to sending the second message to the relay device by the remote device.

91. The apparatus according to claim 90, wherein a difference between the start moment of the second SL DRX on-duration timer and the start moment of the first SL DRX on-duration timer is less than or equal to the second delay.

92. The apparatus according to any one of claims 89 to 91, wherein the second SL DRX configuration further comprises a second SL DRX cycle, and the second SL DRX cycle is determined based on the first SL DRX cycle in the first SL DRX configuration.

93. The apparatus according to any one of claims 89 to 92, wherein the second SL DRX configuration further comprises duration of the second SL DRX on-duration timer, and the duration of the second SL DRX on-duration timer is determined based on the duration of the first SL DRX on-duration timer in the first SL DRX configuration.

94. The apparatus according to any one of claims 89 to 93, wherein the second information further comprises a second identifier of the remote device.

95. A sidelink discontinuous reception-based communication apparatus, comprising:
a transceiver unit, configured to receive second information from a relay device, wherein the second information comprises a first paging parameter of a remote device; and
a processing unit, configured to perform sidelink SL configuration based on the second information, wherein
the relay device communicates and interacts with the remote device by using an SL, and the remote device communicates and interacts with a first network device by using the relay device.

96. The apparatus according to claim 95, wherein the first paging parameter comprises a first identifier of the remote device.

97. The apparatus according to claim 95 or 96, wherein the method further comprises: sending, by the first network device, a first SL discontinuous reception DRX configuration to the relay device, wherein the first SL DRX configuration is for transmitting a first message, the first message is a message sent by the relay device to the remote device, and the first message is for paging the remote device.

98. The apparatus according to claim 97, wherein the first SL DRX configuration is determined based on the second information.

99. The apparatus according to claim 97 or 98, wherein the second information further comprises delay information, and the delay information indicates a first delay of forwarding a message from the first network device by the relay device to the remote device.

100. The apparatus according to any one of claims 97 to 99, wherein the first SL DRX configuration comprises information indicating a start moment of a first SL DRX on-duration timer, and a difference between the start moment of the first SL DRX on-duration timer and a start moment of a paging occasion PO of the remote device is less than or equal to the first delay.

101. The apparatus according to any one of claims 97 to 100, wherein the second information further comprises a time interval between a system frame number SFN and a direct frame number DFN.

102. The apparatus according to any one of claims 97 to 101, wherein the first SL DRX configuration further comprises a first SL DRX cycle, and the first SL DRX cycle is the same as a paging cycle of the remote device.

103. The apparatus according to any one of claims 97 to 102, wherein the first SL DRX configuration further comprises duration of the first SL DRX on-duration timer, and the duration of the first SL DRX on-duration timer is greater than or equal to duration of the PO of the remote device.

104. The apparatus according to any one of claims 97 to 103, wherein the first paging parameter further comprises cycle information; and
the processing unit is specifically configured to:
determine the first SL DRX configuration based on the second information.

105. A sidelink communication apparatus, comprising:
a sending unit, configured to send first information to a relay device, wherein the first information comprises a first paging parameter of a remote device; and
a receiving unit, configured to receive a first sidelink SL discontinuous reception DRX configuration from the relay device, wherein the first SL DRX configuration is determined based on second information, the second information comprises the first paging parameter, and the first SL DRX configuration is used by the remote device to receive a first message from the relay device, wherein
the remote device communicates and interacts with the relay device by using an SL, and the remote device communicates and interacts with a first network device by using the relay device.

106. The apparatus according to claim 105, wherein the first paging parameter comprises a first identifier of the remote device.

107. The apparatus according to claim 105 or 106, wherein the first paging parameter further comprises cycle information.

108. The apparatus according to any one of claims 105 to 107, wherein the first message is for paging the remote device.

109. The apparatus according to any one of claims 105 to 108, wherein the first SL DRX configuration further comprises a first SL DRX cycle, and the first SL DRX cycle is the same as a paging cycle of the remote device.

110. The apparatus according to any one of claims 105 to 109, wherein the first SL DRX configuration further comprises duration of a first SL DRX on-duration timer, and the duration of the first SL DRX on-duration timer is greater than or equal to duration of a PO of the remote device.

111. The apparatus according to any one of claims 105 to 110, wherein the method further comprises:
sending, by the remote device, a second SL DRX configuration to the relay device, wherein the second SL DRX configuration is determined based on the first SL DRX configuration, and the second SL DRX configuration is used by the remote device to send a second message to the relay device.

112. The apparatus according to claim 111, wherein the second SL DRX configuration comprises information indicating a start moment of a second SL DRX on-duration timer, the start moment of the second SL DRX on-duration timer is determined based on a second delay, and the second delay is a delay from receiving the first message from the relay device by the remote device to sending a response message of the first message to the relay device by the remote device.

113. The apparatus according to claim 112, wherein a difference between the start moment of the second SL DRX on-duration timer and a start moment of the first SL DRX on-duration timer is less than or equal to the second delay.

114. The apparatus according to claim 112, wherein the second SL DRX configuration further comprises a second SL DRX cycle, and the second SL DRX cycle is determined based on the first SL DRX cycle in the first SL DRX configuration.

115. The apparatus according to claim 113 or 114, wherein the second SL DRX configuration further comprises duration of the second SLDRX on-duration timer, and the duration of the second SL DRX on-duration timer is determined based on the duration of the first SL DRX on-duration timer in the first SL DRX configuration.

116. The apparatus according to any one of claims 105 to 115, wherein the second information further comprises a second identifier of the remote device.

117. A sidelink communication apparatus, comprising:
a receiving unit, configured to receive first request information from a first network device, wherein the first request information is for requesting cycle information; and
a sending unit, configured to send the cycle information to the first network device, wherein the cycle information is for determining a first sidelink SL discontinuous reception DRX configuration, the first SL DRX configuration is used by a relay device to send a first message to a remote device, and the first message is for paging the remote device.

118. The apparatus according to claim 117, wherein the first request information comprises a first identifier of the remote device.

119. A sidelink communication apparatus, comprising:
a receiving unit, configured to receive second request information from a first network device, wherein the second request information is for requesting to configure a sidelink SL discontinuous reception DRX configuration for a remote device; and
a sending unit, configured to send a first SL DRX configuration to the first network device, wherein the first SL DRX configuration is used by a relay device to send a first message to the remote device, and the first message is for paging the remote device.

120. The apparatus according to claim 119, wherein the second request message comprises second information and/or third information, the second information comprises a first paging parameter, and the third information comprises a paging control channel configuration.

121. The apparatus according to claim 120, wherein the first paging parameter comprises a first identifier of the remote device.

122. A sidelink communication apparatus, comprising:
a transceiver unit, configured to receive first information from a remote device, wherein the first information comprises a first paging parameter of the remote device; and
a processing unit, configured to determine a first sidelink SL discontinuous reception DRX configuration based on the first information, wherein the first SL DRX configuration is used by the remote device to receive a first message from a relay device.

123. The apparatus according to claim 122, wherein the processing unit is specifically configured to:
determine the first SL DRX configuration based on the first information and third information, wherein the third information comprises a paging control channel configuration.

124. The apparatus according to claim 123, wherein the transceiver unit is further configured to:
receive the third information from a first network device, wherein the third information comprises the paging control channel configuration.

125. The apparatus according to any one of claims 122 to 124, wherein the first message is for paging the remote device.

126. The apparatus according to any one of claims 122 to 125, wherein the first paging parameter comprises a first identifier of the remote device.

127. The apparatus according to claim 126, wherein the first paging parameter further comprises cycle information.

128. The apparatus according to any one of claims 122 to 127, wherein the first SL DRX configuration comprises a first SL DRX cycle, the first SL DRX cycle is a cycle in which the relay device sends the first message to the remote device, the first SL DRX cycle is the same as a paging cycle of the remote device, and the paging cycle of the remote device is a cycle in which the first network device pages the remote device.

129. The apparatus according to any one of claims 122 to 128, wherein the first SL DRX configuration comprises duration of a first SL DRX on-duration timer, and the duration of the first SL DRX on-duration timer is greater than or equal to duration of a PO of the remote device.

130. The apparatus according to any one of claims 122 to 129, wherein the transceiver unit is further configured to:
receive a second SLDRX configuration from the remote device, wherein the second SLDRX configuration is determined based on the first SL DRX configuration, and the second SL DRX configuration is used by the relay device to receive a second message from the remote device; and
receive the second message.

131. The apparatus according to claim 130, wherein the second SL DRX configuration indicates a start moment of a second SL DRX on-duration timer, the start moment of the second SL DRX on-duration timer is determined based on a second delay, and the second delay is a delay from receiving the first message from the relay device by the remote device to sending the second message to the relay device by the remote device.

132. The apparatus according to claim 131, wherein a difference between the start moment of the second SL DRX on-duration timer and a start moment of the first SL DRX on-duration timer is less than or equal to the second delay.

133. The apparatus according to any one of claims 130 to 132, wherein the second SL DRX configuration further comprises a second SL DRX cycle, and the second SL DRX cycle is determined based on the first SL DRX cycle in the first SL DRX configuration.

134. The apparatus according to any one of claims 130 to 133, wherein the second SL DRX configuration further comprises duration of the second SL DRX on-duration timer, and the duration of the second SL DRX on-duration timer is determined based on the duration of the first SL DRX on-duration timer in the first SL DRX configuration.

135. A sidelink communication apparatus, comprising:
a transceiver unit, configured to receive fourth information from a relay device, wherein the fourth information comprises discontinuous reception DRX assistance information of a remote device; and
a processing unit, configured to determine a first sidelink SL DRX configuration based on the fourth information, wherein the first SL DRX configuration is used by the remote device to receive a first message from the relay device.

136. The apparatus according to claim 135, wherein the DRX assistance information comprises delay information, and the delay information indicates a delay of forwarding a message from a first network device by the relay device to the remote device.

137. The apparatus according to claim 135 or 136, wherein the DRX assistance information comprises a time interval between a system frame number SFN and a direct frame number DFN.

138. The apparatus according to any one of claims 135 to 137, wherein the transceiver unit is further configured to:
send the first SL DRX configuration to the relay device.

139. The apparatus according to any one of claims 135 to 138, wherein the first message is for paging the remote device.

140. The apparatus according to any one of claims 135 to 139, wherein the first SL DRX configuration comprises a first SL DRX cycle, the first SL DRX cycle is a cycle in which the relay device sends the first message to the remote device, the first SL DRX cycle is the same as a paging cycle of the remote device, and the paging cycle of the remote device is a cycle in which the first network device pages the remote device.

141. The apparatus according to any one of claims 135 to 140, wherein the transceiver unit is further configured to:
send a second SL DRX configuration to the relay device, wherein the second SL DRX configuration is determined based on the first SL DRX configuration, and the second SL DRX configuration is used by the relay device to receive a second message from the remote device; and
receive the second message from the relay device after receiving the first message.

142. The apparatus according to claim 141, wherein the second SL DRX configuration indicates a start moment of a second SL DRX on-duration timer, the start moment of the second SL DRX on-duration timer is determined based on a second delay, and the second delay is a delay from receiving the first message from the relay device by the remote device to sending the second message to the relay device by the remote device.

143. The apparatus according to claim 142, wherein a difference between the start moment of the second SL DRX on-duration timer and a start moment of a first SL DRX on-duration timer is less than or equal to the second delay.

144. The apparatus according to any one of claims 141 to 143, wherein the second SL DRX configuration further comprises a second SL DRX cycle, and the second SL DRX cycle is determined based on the first SL DRX cycle in the first SL DRX configuration.

145. The apparatus according to any one of claims 141 to 144, wherein the second SL DRX configuration further comprises duration of the second SL DRX on-duration timer, and the duration of the second SL DRX on-duration timer is determined based on duration of the first SL DRX on-duration timer in the first SL DRX configuration.

146. A sidelink communication apparatus, comprising:
a transceiver unit, configured to send fourth information to a remote device, wherein the fourth information comprises discontinuous reception DRX assistance information of the remote device; and
a processing module, configured to determine a first sidelink SL DRX configuration based on the fourth information; or
the transceiver unit is further configured to receive a first SL DRX configuration from the remote device, wherein
the first SL DRX configuration is determined based on the fourth information, and the first SL DRX configuration is used by the remote device to receive a first message from a relay device.

147. The apparatus according to claim 146, wherein the DRX assistance information comprises delay information, and the delay information indicates a delay of forwarding a message from a first network device by the relay device to the remote device.

148. The apparatus according to claim 146 or 147, wherein the DRX assistance information comprises a time interval between a system frame number SFN and a direct frame number DFN.

149. The apparatus according to any one of claims 146 to 148, wherein the transceiver unit is further configured to:
receive the first SL DRX configuration from the remote device.

150. The apparatus according to any one of claims 146 to 149, wherein the first message is for paging the remote device.

151. The apparatus according to any one of claims 146 to 150, wherein the first SL DRX configuration comprises a first SL DRX cycle, the first SL DRX cycle is a cycle in which the relay device sends the first message to the remote device, the first SL DRX cycle is the same as a paging cycle of the remote device, and the paging cycle of the remote device is a cycle in which the first network device pages the remote device.

152. The apparatus according to any one of claims 146 to 151, wherein the transceiver unit is further configured to:
receive a second SLDRX configuration from the remote device, wherein the second SLDRX configuration is determined based on the first SL DRX configuration, and the second SL DRX configuration is used by the relay device to receive a second message from the remote device; and
receive the second message after sending the first message to the remote device.

153. The apparatus according to claim 152, wherein the second SL DRX configuration indicates a start moment of a second SL DRX on-duration timer, the start moment of the second SL DRX on-duration timer is determined based on a second delay, and the second delay is a delay from receiving the first message from the relay device by the remote device to sending the second message to the relay device by the remote device.

154. The apparatus according to claim 153, wherein a difference between the start moment of the second SL DRX on-duration timer and a start moment of a first SL DRX on-duration timer is less than or equal to the second delay.

155. The apparatus according to any one of claims 152 to 154, wherein the second SL DRX configuration further comprises a second SL DRX cycle, and the second SL DRX cycle is determined based on the first SL DRX cycle in the first SL DRX configuration.

156. The apparatus according to any one of claims 152 to 155, wherein the second SL DRX configuration further comprises duration of the second SL DRX on-duration timer, and the duration of the second SL DRX on-duration timer is determined based on duration of the first SL DRX on-duration timer in the first SL DRX configuration.

157. A communication apparatus, comprising a module configured to perform the method according to any one of claims 1 to 16, comprising a module configured to perform the method according to any one of claims 17 to 26, comprising a module configured to perform the method according to any one of claims 27 to 38, comprising a module configured to perform the method according to claim 39 or 40, comprising a module configured to perform the method according to any one of claims 41 to 43, comprising a module configured to perform the method according to any one of claims 44 to 56, comprising a module configured to perform the method according to any one of claims 57 to 67, or comprising a module configured to perform the method according to any one of claims 68 to 78.

158. A communication apparatus, comprising a processor, wherein a memory is configured to store one or more computer programs; and when the one or more computer programs are run, the method according to any one of claims 1 to 16 is performed, the method according to any one of claims 17 to 26 is performed, the method according to any one of claims 27 to 38 is performed, the method according to claim 39 or 40 is performed, the method according to any one of claims 41 to 43 is performed, the method according to any one of claims 44 to 56 is performed, the method according to any one of claims 57 to 67 is performed, or the method according to any one of claims 68 to 78 is performed.

159. The communication apparatus according to claim 158, further comprising the memory and/or a communication interface.

160. A computer-readable storage medium, wherein the storage medium stores a computer program or instructions; and when the computer program or the instructions are executed by a communication apparatus, the method according to any one of claims 1 to 16, the method according to any one of claims 17 to 26, the method according to any one of claims 27 to 38, the method according to claim 39 or 40, the method according to any one of claims 41 to 43, the method according to any one of claims 44 to 56, the method according to any one of claims 57 to 67, or the method according to any one of claims 68 to 78 is implemented.

161. A communication system, comprising a relay device, a first network device, and a remote device, wherein the relay device is configured to perform the method according to any one of claims 1 to 16, configured to perform the method according to any one of claims 44 to 56, or configured to perform the method according to any one of claims 68 to 78, the first network device is configured to perform the method according to any one of claims 17 to 26, and the remote device is configured to perform the method according to any one of claims 27 to 38, or configured to perform the method according to any one of claims 57 to 67.

162. The communication system according to claim 161, further comprising a second network device, configured to perform the method according to claim 39 or 40, or configured to perform the method according to any one of claims 41 to 43.

163. A computer program product, wherein the computer program product stores a computer program or instructions; and when the computer program or the instructions are executed by a communication apparatus, the method according to any one of claims 1 to 16, the method according to any one of claims 17 to 26, the method according to any one of claims 27 to 38, the method according to claim 39 or 40, the method according to any one of claims 41 to 43, the method according to any one of claims 44 to 56, the method according to any one of claims 57 to 67, or the method according to any one of claims 68 to 78 is implemented.

164. A chip system, comprising a processor coupled to a memory, wherein the processor is configured to execute a program, instructions, or code stored in the memory, to implement the method according to any one of claims 1 to 16, the method according to any one of claims 17 to 26, the method according to any one of claims 27 to 38, the method according to claim 39 or 40, the method according to any one of claims 41 to 43, the method according to any one of claims 44 to 56, the method according to any one of claims 57 to 67, or the method according to any one of claims 68 to 78.
